(19) Europäisches Patentamt
European Patent Office
Office européen des brevets

(11) EP 0 419 926 B1

(12) # EUROPÄISCHE PATENTSCHRIFT

(45) Veröffentlichungstag und Bekanntmachung des Hinweises auf die Patenterteilung:
**10.12.1997 Patentblatt 1997/50**

(51) Int Cl.6: **C08L 67/03**, C08L 67/02, C08L 69/00

(21) Anmeldenummer: **90117446.6**

(22) Anmeldetag: **11.09.1990**

(54) **Thermoplastische Legierungen mit Polyestern und Polyestercarbonaten auf Basis substituierter Cycloalkylidenbisphenole**

Thermoplastic alloys with polyesters and polyestercarbonates based on substituted cycloalkylidenebisphenols

Alliages thermoplastiques avec polyesters et polyestercarbonates à base de bisphénols cycloalkylidéniques substitués

(84) Benannte Vertragsstaaten:
**BE DE FR GB IT**

(30) Priorität: **23.09.1989 DE 3931771**

(43) Veröffentlichungstag der Anmeldung:
**03.04.1991 Patentblatt 1991/14**

(73) Patentinhaber: **BAYER AG
51368 Leverkusen (DE)**

(72) Erfinder:
- **Serini, Volker, Dr.
D-4150 Krefeld (DE)**
- **Freitag, Dieter, Dr.
D-4150 Krefeld (DE)**
- **Grigo, Ulrich, Dr.
D-4152 Kempen 3 (DE)**

(56) Entgegenhaltungen:
**EP-A- 0 133 907**
**EP-A- 0 304 040**
**EP-A- 0 362 646**
**DE-A- 3 903 103**
**US-A- 4 438 241**
**US-A- 4 469 833**

Bemerkungen:
Die Akte enthält technische Angaben, die nach dem Eingang der Anmeldung eingereicht wurden und die nicht in dieser Patentschrift enthalten sind.

EP 0 419 926 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Aus US-P 4,438,241 sind Polyarylate, die abgeleitet sind aus wenigstens einer aromatischen Dicarbonsäure und wenigstens einem $C_8$-$C_{18}$-Cycloalkylidendiphenol bekannt.

Aus US-P 4,469,833 sind Polycarbonate bekannt, die aus wenigstens einem halogenfreien und schwefelfreien Diphenol und einer geringen Menge wenigstens eines halogenfreien Thiodiphenols abgeleitet sind.

Gegenstand der vorliegenden Erfindung sind thermoplastische Legierungen aus

A) 1 bis 99 Gewichtsprozent mindestens eines Polyesters und/oder Polyestercarbonats aus

a) aromatischen Diphenolen,

$b_1$) aliphatischen und/oder cycloaliphatischen und/oder aromatischen Dicarbonsäuren und gegebenenfalls

$b_2$) Kohlensäure,
enthaltend $b_1$) in einer Menge von 0,1 bis 100 Mol-% und $b_2$) in einer Menge von 0 bis 99,9 Mol-%, bezogen auf ($b_1$ + $b_2$), worin a) zu 0,1 bis 100 Mol-% aus Diphenolen der Formel

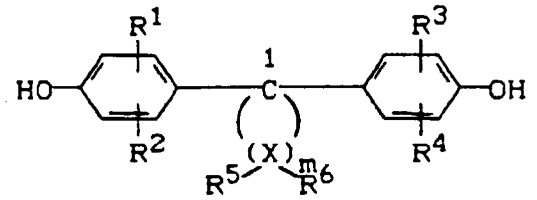

(I),

besteht, worin

| | |
|---|---|
| $R^1$, $R^2$, $R^3$ und $R^4$ | unabhängig voneinander Wasserstoff, $C_1$-$C_{12}$-Kohlenwasserstoffrest, Halogen |
| m | die ganze Zahl 4 oder 5 ist, |
| $R^5$ und $R^6$, | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^5$ und $R^6$ gleichzeitig Alkyl bedeuten,
und mindestens einem weiteren Bestandteil ausgewählt aus

B) 0 bis 99 Gew.-% mindestens eines amorphen von (A) verschiedenen Thermoplasten mit einer Glastemperatur von 40 bis 300°C,

C) 0 bis 99 Gew.-% mindestens eines teilkristallinen Thermoplasten mit einer Schmelztemperatur von 60 bis 400°C,

D) 0 bis 99 Gew.-% mindestens eines Kautschuks, und

E) 0 bis 99 Gew.-% mindestens eines Pfropfpolymezisats aus mindestens einem Kautschuk mit mindestens einem aufgepfropften Polymer aus mindestens einem Monomeren aus der Gruppe der Vinylverbindungen, Acryl- und Methacrylverbindungen und Maleinsäureabkömumlinge.

Die erfindungsgemäßen Legierungen weisen bedeutende Vorteile auf. Sie besitzen gleichzeitig hohe Wärmestandfestigkeit, gute Fließfähigkeit der Schmelze und hohe Temperaturstabilität, selbst unter Luftsauerstoffeinfluß. Sie sind besonders strukturviskos, was für die Spritzguß- und die Extrusionsverarbeitung von bedeutendem Nutzen ist; Spritzgußteile sind leicht entformbar. Die Legierungen sind außerdem sehr zäh, besonders kriechstromfest, hydrolytisch

stabil und stabil gegen UV- und $\gamma$-Strahlen. Weiterhin haben sie eine hohe Gasdurchlässigkeit und eine hohe Selektivität für Gastrennungen, so beispielsweise für die Trennung von Kohlendioxid/Sauerstoff-Gemischen.

Die erfindungsgemäßen thermoplastischen Legierungen enthalten bevorzugt 5 bis 98 Gew.-%, besonders bevorzugt 10 bis 95 Gew.-% und insbesondere 20 bis 90 Gew.-% der Komponente (A). Sie enthalten bevorzugt 0 bis 90 Gew.-%, besonders bevorzugt 0 bis 75 Gew.-%, und insbesondere 0 bis 60 Gew.-% mindestens eines amorphen Thermoplasten (B). Sie enthalten bevorzugt 0 bis 90 Gew.-%, besonders bevorzugt 0 bis 75 Gew.-% und insbesondere 0 bis 60 Gew.-% mindestens eines teilkristallinen Thermoplasten (C). Sie enthalten bevorzugt 0 bis 90 Gew.-%, besonders bevorzugt 0 bis 75 Gew.-% und insbesondere 0 - 60 Gew.-% mindestens eines Pfropfpolymerisats (E). Zusätzlich enthalten sie bevorzugt 0 bis 80 Gew.-%, besonders bevorzugt 0 bis 60 Gew.-%, ganz besonders bevorzugt 0 bis 45 Gew.-%, und insbesondere 0 bis 30 Gew.-%, mindestens eines Kautschuks (D).

In den erfindungsgemäßen thermoplastischen Legierungen beträgt die Summe aus dem Kautschuk (D) und dem Kautschukanteil des Pfropfpolymerisats (E) bevorzugt 0 bis 80 Gew.-%, besonders bevorzugt 0 bis 60 Gew.-%, ganz besonders bevorzugt 0 bis 45 Gew.-% und insbesondere 0 bis 30 Gew.-%.

Wenn die Komponente (B) in einer der erfindungsgemäßen Legierungen enthalten ist, so beträgt ihr Anteil bevorzugt mindestens 2 Gew.-%, besonders bevorzugt mindestens 5 Gew.-%, ganz besonders bevorzugt mindestens 10 Gew.-% und insbesondere mindestens 20 Gew.-% der Summe der Komponenten (A), (B), (C), (D) und (E) dieser Legierung. Dies gilt ebenso für die Komponenten (C) und (E).

Wenn die Komponente (D) in einer der erfindungsgemäßen Legierungen enthalten ist, so beträgt ihr Anteil bevorzugt mindestens 2 Gew.-%, besonders bevorzugt mindestens 5 Gew.-% und ganz besonders bevorzugt mindestens 10 Gew.-% der Summe der Komponenten (A), (B), (C), (D) und (E) dieser Legierung. Dies gilt ebenso für die Summe des Kautschukanteils aus den Komponenten (D) und (E).

Die erfindungsgemäßen thermoplastischen Legierungen enthalten bevorzugt neben der Komponente A) einen oder zwei weitere Bestandteile aus B), C), D) und E).

Besonders bevorzugte Legierungen sind thermoplastische Legierungen aus der Komponente (A) und 1 bis 99 Gew.-% mindestens eines amorphen Thermoplasten (B) oder 1 bis 99 Gew.-% mindestens eines Pfropfpolymerisats (E). Insbesondere bevorzugt sind Legierungen aus den Legierungsbestandteilen A) und E).

Besonders bevorzugte Legierungen sind auch solche aus der Komponente (A) und 1 bis 98 Gew.-%, bevorzugt 15 bis 75 Gew.-% und besonders bevorzugt 30 bis 60 Gew.-%, mindestens eines teilkristallinen Thermoplasten mit einer Schmelztemperatur von 60 bis 400°C (C) und 1 bis 98 Gew.-%, bevorzugt 10 bis 35 Gew.-% und besonders bevorzugt 15 bis 25 Gew.-%, mindestens eines Pfropfpolymerisats aus mindestens einem Kautschuk und mindestens einem aufgepfropften Polymer (E).

Besonders bevorzugte Legierungen sind auch thermoplastische Legierungen aus der Komponente (A) und 1 bis 98 Gew.-%, bevorzugt 10 bis 80 Gew.-%, besonders bevorzugt 20 bis 60 Gew.-%, mindestens eines amorphen Thermoplasten (B) mit einer Glastemperatur von 40 bis 300°C und aus 1 bis 98 Gew.-%, bevorzugt 10 bis 80 Gew.-%, besonders bevorzugt 20 bis 60 Gew.-%, mindestens eines Pfropfpolymerisats aus mindestens einem Kautschuk und mindestens einem aufgepfropften Polymer (E).

Besonders bevorzugt sind ebenfalls thermoplastische Legierungen aus der Komponente (A) und 1 bis 98 Gew.-%, bevorzugt 10 bis 80 Gew.-%, besonders bevorzugt 20 bis 70 Gew.-%, mindestens eines amorphen Thermoplasten (B) mit einer Glastemperatur von 40 bis 300°C und aus 1 bis 60 Gew.-%, bevorzugt 1 bis 20 Gew.-% und besonders bevorzugt 2 bis 5 Gew.-%, mindestens eines Kautschuks (D).

Die amorphen Thermoplasten (B) besitzen eine Glastemperatur von bevorzugt 50 bis 280°C, besonders bevorzugt 60 bis 250°C und ganz besonders bevorzugt 80 bis 230°C.

Die teilkristallinen Thermoplasten (C) haben Schmelztemperaturen von bevorzugt 70 bis 350°C, besonders bevorzugt 80 bis 320°C und insbesondere von 100 bis 300°C.

Die erfindungsgemäß einzusetzenden Polyester und Polyestercarbonate gehen zurück auf die deutsche Patentanmeldung P 3 903 103.9 (Le A 26 313) [DE-A-3 903 103] und sind Gegenstand der vorliegenden Erfindung für die Vertragsstaaten BE, FR, GB und IT und sind Polyester und Polyestercarbonate aus

a) aromatischen Diphenolen
$b_1$) aliphatischen und/oder cycloaliphatischen und/oder aromatischen Dicarbonsäuren und gegebenenfalls
$b_2$) Kohlensäure, enthaltend $b_1$) in einer Menge von 0,1 bis 100 Mol-% und $b_2$) in einer Menge von 0 bis 99,9 Mol-%, bezogen auf ($b_1 + b_2$), die dadurch gekennzeichnet sind, daß a) zu 0,1 bis 100 Mol-% aus Diphenolen der Formel

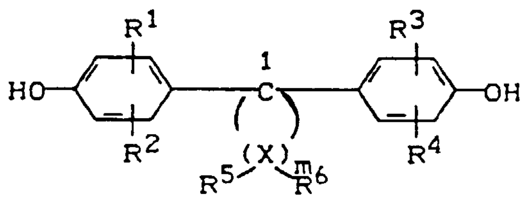 (I),

besteht, worin

$R^1$, $R^2$, $R^3$ und $R^4$ unabhängig voneinander Wasserstoff, $C_1$-$C_{12}$-Kohlenwasserstoffrest, Halogen,
m die ganze Zahl 4 oder 5 ist,
$R^5$ und $R^6$, für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X $R^5$ und $R^6$ gleichzeitig Alkyl bedeuten.

In Formel (I) sind $R^1$, $R^2$, $R^3$ und $R^4$ bevorzugt Wasserstoff, Methyl, Ethyl, Phenyl, Cyclohexyl, Chlor und Brom, besonders bevorzugt jedoch Wasserstoff, Methyl und Brom. Wenn mehr als einer der Reste $R^1$, $R^2$, $R^3$ und $R^4$ ungleich Wasserstoff ist, werden gleiche Substituenten bevorzugt. Wenn zwei der Reste $R^1$, $R^2$, $R^3$ und $R^4$ ungleich Wasserstoff sind, wird die o,o'-Substitution, bezogen auf die phenolischen OH-Gruppen der Formel (I), bevorzugt. Wenn alle vier Reste $R^1$, $R^2$, $R^3$ und $R^4$ ungleich Wasserstoff sind, wird die o,o,o',o'-Substitution, bezogen wie vor, bevorzugt.

In Formel (I) ist m bevorzugt 5.

Weiterhin sind in Formel (I) bevorzugt an 1 - 2 Atomen X, insbesondere nur an einem Atom X, $R^5$ und $R^6$ gleichzeitig Alkyl. Bevorzugter Alkylrest ist Methyl; die X-Atome in $\alpha$-Stellung zu dem di-phenyl-substituierten C-Atom (C-1) sind bevorzugt nicht dialkylsubstituiert, dagegen ist die Alkyl-disubstitution in $\beta$-Stellung zu C-1 bevorzugt.

Erfindungsgemäß einsetzbare Bisphenole der Formel (I) sind z.B.:
1,1-Bis-(4-hydroxyphenyl)-3,3-dimethyl-5-methylcyclohexan,
1,1-Bis-(4-hydroxyphenyl)-3,3-dimethyl-5,5-dimethylcyclohexan,
1,1-Bis-(4-hydroxyphenyl)-3,3-dimethyl-4-methylcyclohexan,
1,1-Bis-(4-hydroxyphenyl)-3,3-dimethyl-5-ethylcyclohexan,
1,1-Bis-(4-hydroxyphenyl)-3,3-dimethyl-5-methylcyclopentan,
1,1-Bis-(3,5-dimethyl-4-hydroxyphenyl)-3,3-dimethyl-5-methyl-cyclohexan,
1,1-Bis-(3,5-diphenyl-4-hydroxyphenyl)-3,3-dimethyl-5-methyl-cyclohexan,
1,1-Bis-(3-methyl-4-hydroxyphenyl)-3,3-dimethyl-5-methyl-cyclohexan,
1,1-Bis-(3-phenyl-4-hydroxyphenyl)-3,3-dimethyl-5-methyl-cyclohexan,
1,1-Bis-(3,5-dichlor-4-hydroxyphenyl)-3,3-dimethyl-5-methyl-cyclohexan,
1,1-Bis-(3,5-dibrom-4-hydroxyphenyl)-3,3-dimethyl-5-methyl-cyclohexan.

Besonders bevorzugt wird das 1,1-Bis-(4-hydroxyphenyl)3,3-dimethyl-5-methyl-cyclohexan.

Die erfindungsgemäß einzusetzenden Dihydroxydiphenylcycloalkane der Formel (I) können in an sich bekannter Weise durch Kondensation von Phenolen der Formel (II) und/oder (III)

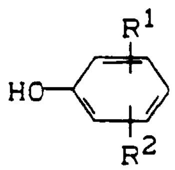 (II)

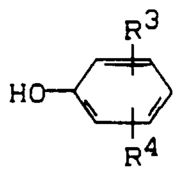 (III)

und Ketonen der Formel (IV)

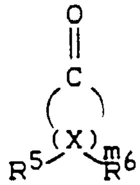

(IV)

hergestellt werden, wobei in den Formeln (II), (III) und (IV)
X, $R^1$, $R^2$, $R^3$, $R^4$, $R^5$, $R^6$ und m die für Formel (I) angegebene Bedeutung haben.

Die erfindungsgemäß einzusetzenden Dihydroxydiphenylcycloalkane der Formel (I), in denen $R^1$, $R^2$, $R^3$ und $R^4$ teilweise oder ganz Halogen bedeuten, können -zumindestens zum Teil - auch durch Halogenierung der entsprechenden unsubstituierten Dihydroxydiphenylcycloalkane erhalten werden. So kann beispielsweise das 1,1-Bis-(4-hydroxyphenyl)-3,3-dimethyl-5-methyl-cyclohexan durch Kernchlorierung oder Kernbromierung nach an sich bekannten Methoden zu dem 1,1-Bis-(3,5-dichlor-4-hydroxyphenyl)-3,3-dimethyl-5-methyl-cyclohexan oder dem 1,1-Bis-(3,5-dibrom-4-hydroxyphenyl)-3,3-dimethyl-5-methylcyclohexan umgesetzt werden.

Diphenole der Formel (I) und ihre Herstellung sind in der Deutschen Patentanmeldung P 38 32 396.6 (DE-A-3 832 396) näher beschrieben.

Aromatische Diphenole (Komponente a), die neben denen der Formel (I) für den Aufbau der erfindungsgemäß einzusetzenden Polyester und Polyestercarbonate verwendet werden können, sind beispielsweise:
Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, α,α'-Bis-(hydroxyphenyl)-isopropylbenzole, Pentamethyl-(hydroxyphenyl)-indanole, sowie entsprechende kernsubstituierte Verbindungen.

Diese und weitere geeignete aromatische Dihydroxyverbindungen sind z.B in Hermann Schnell, "Chemistry and Physics of Polycarbonates", Polymer Reviews 9, Interscience Publishers, New York 1964; in V. Serini, D. Freitag und H. Vernaleken, "Polycarbonate aus o,o,o',o'-tetramethylsubstituierten Bisphenolen", Angewandte Makromolekulare Chemie 55 (1976) 175-189, in den US-PS 3 028 365, 2 999 835, 3 148 172, 3 271 368, 2 991 273, 3 271 367, 3 780 078, 3 014 891 und 2 999 846, in den DE-OS 1 570 703, 2 063 050, 2 063 052, 2 211 957, 2 402 175, 2 402 176, 2 402 177 und in der FR-PS 1 561 518 beschrieben.

Bevorzugt als Diphenole sind:
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenylethan, 2,2-Bis-(3-methyl-4-hydroxyphenyl)-propan, 2,2-Bis-(3,5-dichlor-4-hydroxyphenyl)propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2-Bis-(3,5-dimethyl-4-hydroxyphenyl)-propan, ganz besonders bevorzugt 2,2-Bis-(4-hydroxyphenyl)-propan.

Aliphatische, cycloaliphatische oder aromatische Dicarbonsäuren (Komponente $b_1$), die für den Aufbau der erfindungsgemäß einzusetzenden Polyester und Polyestercarbonate geeignet sind, sind beispielsweise:
Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophtalsäure, Tetrahydrophthalsäure, 3,6-Endomethylentetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)propan, Trimethyl-3-phenylindan-4,5-dicarbonsäure.

Bevorzugt werden die erfindungsgemäß einzusetzenden Polyester und Polyestercarbonate aus aromatischen Dicarbonsäuren hergestellt. Von den aromatischen Dicarbonsäuren werden besonders bevorzugt die Terephthalsäure und/oder Isophthalsäure eingesetzt. Ganz besonders bevorzugt ist die Terephthalsäure.

Bevorzugt werden die erfindungsgemäß einzusetzenden Polyester und Polyestercarbonate, in denen die aromatischen Diphenole (Komponente a) zu 1 bis 100 Mol.-%, bevorzugt zu 5 bis 100 Mol.-%, besonders bevorzugt zu 10 bis 100 Mol.-% und insbesondere zu 20 bis 100 Mol-% aus Diphenolen der Formel (I) bestehen. Von den Polyestern und Polyestercarbonaten, in denen die aromatischen Diphenole (Komponente a) zu 20 bis 100 Mol.-% aus solchen der Formel (I) bestehen, werden die mit 20 bis 50 Mol.-% und 55 bis 100 Mol.-% aromatischen Diphenolen der Formel

(I) bevorzugt, die mit 20 bis 40 Mol.-% und 70 bis 100 Mol.-% aromatischen Diphenolen der Formel (I) besonders bevorzugt, die mit 20 bis 35 Mol.-% und 85 bis 100 Mol.-% aromatischen Diphenolen der Formel (I) ganz besonders bevorzugt und insbesondere die mit 100 Mol.-% aromatischen Diphenolen der Formel (I) bevorzugt.

Bevorzugt werden die erfindungsgemäß einzusetzenden Polyestercarbonate, in denen die Dicarbonsäuren (Komponente $b_1$) in einer Menge von 5 bis 98 Mol.-%, bevorzugt von 10 bis 95 Mol.-% und besonders bevorzugt von 15 bis 95 Mol-% enthalten sind. Von letzteren Polyestercarbonaten sind wiederum die bevorzugt, in denen die Dicarbonsäuren (Komponente $b_1$) in einer Menge von 15 bis 50 Mol.-% und 60 bis 95 Mol.-% und insbesonders von 15 bis 40 Mol.-% und 75 bis 90 Mol.-%, bezogen auf die Summe der Dicarbonsäuren (Komponente $b_1$) und der Kohlensäure (Komponente $b_2$), enthalten sind.

Die erfindungsgemäß einzusetzenden Polyester und Polyestercarbonate können nach Verfahren hergestellt werden, wie sie für die Polyester- bzw. Polyestercarbonat-Herstellung aus der Literatur bekannt sind, so z.B. nach Verfahren in homogener Lösung, nach Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Verfahren zur Herstellung von Polyestern und Polyestercarbonaten in homogener Lösung werden beispielsweise beschrieben in den Patentschriften DE-A-1 420 475, US 3 169 121 und US 4 156 069 und in der Monographie Polymer Reviews, Volume 10, Condensation Polymers by Interfacial and Solution Methods, Paul W. Morgan, Interscience Publishers New York 1965, Kap. VIII, S. 325 ff, Polyester. So können beispielsweise Polyester durch Umsetzung von Dicarbonsäuredichloriden mit aromatischen Dihydroxyverbindungen in Gegenwart von Pyridin als Säureacceptor und Pyridin oder chlorierten Kohlenwasserstoffen wie Methylenchlorid und Chlorbenzol als Lösemitteln hergestellt werden.

Polyestercarbonate können beispielsweise ebenso in homogener Lösung hergestellt werden, indem Phosgen, Dicarbonsäure und aromatische Dihydroxyverbindung oder Phosgen, Dicarbonsäuredichlorid und aromatische Dihydroxyverbindung als Monomere eingesetzt werden. Die Reaktion verläuft schon bei niedrigen Temperaturen, so z.B. bei 10 bis 40°C, ausreichend schnell.

Schmelzumesterungsverfahren zur Herstellung von Polyestern und Polycarbonaten sind beispielsweise das Acetat-Verfahren und das Phenylester-Verfahren.

Das Acetatverfahren wird beispielsweise beschrieben in den Patentschriften US 3 494 885, 4 386 186 und EP 26 120, 26 121, 26 684, 28 030, 39 845, 91 602, 97 970 sowie in der Monographie Polyesters, V.V. Korshak und S.V. Vinograda, Pergamon Press, Oxford, 1965, sowie in der Veröffentlichung V.V. Korshak und S.V. Vinograda, Chemiefasersymp., Abh. d. Akad. Wiss. Berlin 1 (1963) 355 ff. Bei diesem Verfahren werden im allgemeinen bei Temperaturen von 200 bis 400°C Bisacetate von aromatischen Dihydroxyverbindungen wie z.B. Bisphenol-A-diacetat, mit Dicarbonsäuren, z.B. aromatischen Dicarbonsäuren, wie Isophthalsäure und Terephthalsäure, in der Schmelze unter Abspaltung von Essigsäure zu aromatischen Polyestern umgesetzt. Dabei können zur Verbesserung der Schmelzfließfähigkeit des Polyesters während des Prozesses und zur Verhinderung einer Dicarbonsäuresublimation Hilfslösemittel eingesetzt werden wie z.B. Diphenylether, substituierte Cyclohexane und Decahydronaphthalen.

Die Reaktion kann gegebenenfalls katalysiert werden, wie z.B. mit Alkali- und Erdalkaliverbindungen, Ti-Verbindungen, Zn-Verbindungen, Sn-Verbindungen, Sb-Verbindungen und Mn-Verbindungen. Die Kondensationsreaktion kann, insbesondere bei kristallisierenden Polyestern, auch so vorgenommen werden, daß die Kondensationsreaktion nicht bis zum Ende in der Schmelze durchgeführt wird, sondern daß die Kondensation in der Schmelze nur bis zu einem noch leicht fließenden Präpolymer erfolgt, welches dann unterhalb seines Schmelzpunktes bis zum Erhalt des gewünschten Kondensationsgrades einer Festphasenkondensation unterworfen wird. Dabei wird im allgemeinen nur wenig unterhalb des Polymerschmelzpunktes bei reduziertem Druck unter weiterer Abspaltung und Entfernung von Essigsäure der weitere Aufbau des Polymeren vollzogen.

Das Phenylesterverfahren zur Herstellung von aromatischen Polyestern und Polycarbonaten wird beispielsweise beschrieben in den Patentschriften US 4 661 580, 4 680 371, 4 680 372, EP 79 075, 146 887, 156 103, 234 913, 234 914, 240 301 und DAS 1 495 626, 2 232 877. Bei diesem Verfahren werden im allgemeinen bei Temperaturen von 200 bis 400°C aromatische Dihydroxyverbindungen wie z.B. Bisphenol-A mit aromatischen Dicarbonsäureestern, wie z.B. Isophthalsäurediphenylester und Terephthalsäurediphenylester, in der Schmelze unter Phenolabspaltung zu aromatischen Polyestern umgesetzt. Zur Herstellung von Polyestern nach diesem Verfahren können auch aromatische Dihydroxyverbindungen, Dicarbonsäuren und Diester der Kohlensäure wie Diphenylcarbonat als Ausgangsstoffe umgesetzt werden. In diesem Fall werden die für die Reaktion benötigten Phenylester der Dicarbonsäuren intermediär unter $CO_2$-und Phenolabspaltung gebildet.

Zur Herstellung von Polyestercarbonaten nach dem Phenylesterverfahren werden im allgemeinen zusätzlich zu den Diestern der Dicarbonsäuren Diester der Kohlensäure eingesetzt, wie Diphenylcarbonat. Es können jedoch auch nur aromatische Dihydroxyverbindungen, Dicarbonsäuren und Diphenylcarbonat für die Polyestercarbonatherstellung eingesetzt werden. Bei der Polyestercarbonatherstellung ist im allgemeinen die Summe aus eingesetzten Diestern von Dicarbonsäuren und Dicarbonsäuren kleiner als die Summe an eingesetzten Bisphenolen, alles bezogen auf Molteile. Wie schon für das Acetatverfahren beschrieben, können beim Phenylesterverfahren auch Katalysatoren zur Beschleunigung der Kondensationsreaktion verwendet werden, können Hilfslösemittel eingesetzt werden und kann eine Festphasenkondensation des Präpolymeren erfolgen. Katalysatoren und Hilfslösemittel können dieselben sein, wie schon beim Acetatverfahren beschrieben.

Das Zweiphasengrenzflächenverfahren zur Herstellung von Polyestern und Polyestercarbonaten wird beispielsweise beschrieben in den Patentschriften EP 68 014, 88 322, 134 898, 151 750, 182 189, 219 708, 272 426 und DE-A-2 940 024, 3 007 934, 3 440 020 und in der Monographie, Polymer Reviews, Volume 10, Condensation Polymers by Interfacial and Solution Methods, Paul W. Morgan, Interscience Publishers New York 1965, Kap. VIII, S. 325, Polyester.

Als Ausgangskomponenten für die Herstellung der erfindungsgemäß einzusetzenden Polyester und Polyestercarbonate nach dem Zweiphasengrenzflächenverfahren dienen bevorzugt aromatische Dihydroxyverbindungen, Dicarbonsäuredichloride und Phosgen.

Auch der Einsatz von Terephthalsäure und/oder Isophthalsäure ist beim Zweiphasengrenzflächenverfahren möglich, wobei intermediär mit Hilfe von Phosgen Dicarbonsäurechloride bzw. -dichloride gebildet werden.

Die Polykondensation erfolgt beim Zweiphasengrenzflächenverfahren in einem Zweiphasensystem aus wäßrig-alkalischer Lösung und mit Wasser nicht mischbarem organischem Lösungsmittel. Beispielsweise wird die aromatische Dihydroxyverbindung, in wäßrigem Alkali als Diphenolat gelöst, mit dem Dicarbonsäuredichlorid und gegebenenfalls Phosgen, gelöst im organischen Lösungsmittel, unter Rühren umgesetzt. Der sich bildende Polyester bzw. das sich bildende Polyestercarbonat werden im organischen Lösungsmittel gelöst. Wenn Dicarbonsäuredichlorid und Phosgen eingesetzt werden, wenn also Polyestercarbonate hergestellt werden, dann können das Dicarbonsäuredichlorid und das Phosgen auf unterschiedliche Weise eingesetzt werden. So kann beispielsweise zunächst nur Dicarbonsäurechlorid mit dem Alkalibisphenolat umgesetzt werden und dann erst das für die Vollendung der Polykondensation benötigte Phosgen zugesetzt werden. Es können beispielsweise auch das Dicarbonsäuredichlorid und ein Teil des benötigten Phosgens gemeinsam mit dem Bisphenolat umgesetzt werden und dann der Rest der benötigten Phosgengesamtmenge zugesetzt werden. Die Polykondensation wird im allgemeinen mit Hilfe eines Katalysators durchgeführt. Der Katalysator, unten näher beschrieben, kann beispielsweise zugesetzt werden, wenn die Dicarbonsäurechloride und das Phosgen bereits eine gewisse Zeit mit dem Alkalibisphenolat reagiert haben. Er kann jedoch auch schon, zumindest teilweise, gleich zu Beginn der Reaktion eingesetzt werden. Es können aber auch unterschiedliche Katalysatoren in einer Kondensationsreaktion verwendet werden, wobei der Zugabezeitpunkt der einzelnen Katalysatoren unterschiedlich sein kann. Im allgemeinen wird die Polykondensation zur Einstellung bestimmter Molekulargewichte in Gegenwart von Kettenbegrenzern durchgeführt. Zur Erzielung bestimmter Eigenschaften, so z.B. von Strukturviskosität, können beispielsweise Verzweiger eingesetzt werden. Auch Antioxidantien können, z.B. zur Erzielung sehr farbheller Polykondensate, in der Reaktion Einsatz finden.

Als mit Wasser nicht mischbare organische Lösungsmittel können beispielsweise chlorierte Kohlenwasserstoffe, wie Chloroform, Dichlorethan, Tri- und Tetrachlorethylen, Tetrachlorethan, Dichlormethan, Chlorbenzol und Dichlorbenzol, aber auch nicht chlorierte Kohlenwasserstoffe, wie Toluol und Xylol, eingesetzt werden. Bevorzugt werden Chlorbenzol oder Dichlormethan oder Mischungen von beiden verwendet.

Als Kettenbegrenzer werden Verbindungen eingesetzt, wie sie von Polycarbonaten, Polyestern und Polyestercarbonaten her bekannt sind, so z.B. sekundäre Amine, Phenole und Säurechloride. Bevorzugt werden Phenole, wie Phenol und Alkylphenol, besonders bevorzugt solche mit $C_1$-$C_{12}$-Alkylgruppen, wie p-tert.-Butylphenol, m- und p-3,5-Dimethyl-heptyl-phenol und m- und p-1,1,3,3-Tetramethylbutylphenol sowie Hydroxydiphenyl und p-Cumenylphenol verwendet. Ganz besonders bevorzugt wird das p-1,1,3,3-Tetramethylbutylphenol (p-Isooctylphenol) eingesetzt.

Als Verzweiger dienen, falls benutzt, in bekannter Weise geringe Mengen, vorzugsweise Mengen zwischen 0,05 und 3,0 Mol.-% (bezogen auf eingesetzte Diphenole), an dreioder mehr als dreifunktionellen Verbindungen, insbesondere solchen mit drei oder mehr als drei phenolischen Hydroxylgruppen, um verzweigte Polyester oder Polyestercarbonate zu erhalten. Einige der verwendbaren Verbindungen mit drei oder mehr als drei phenolischen Hydroxylgruppen sind

Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,

Tetra-(4-(4-hydroxyphenyl-isopropyl)-phenoxy)-methan und
1,4-Bis-((4'-,4"-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Katalysatoren können tertiäre Amine und/oder Phasentransferkatalysatoren, wie quartäre Ammonium- und Phosphoniumverbindungen und/oder Kronenether eingesetzt werden. Bevorzugte Katalysatoren sind beispielsweise N-Ethylpiperidin, Tetrabutylammoniumbromid und/oder Triphenylbenzylphosphoniumbromid.

Die erfindungsgemäß einzusetzenden Polyester und Polyestercarbonate weisen im allgemeinen mittlere Molekulargewichte $\overline{M}w$ von mindestens 10 000, vorzugsweise von 10 000 bis 250 000 und insbesondere von 15 000 bis 80 000 auf.

Den erfindungsgemäß einzusetzenden Polyestern und Polyestercarbonaten können vor oder während ihrer Verarbeitung die für thermoplastische Polyester und Polyestercarbonate üblichen Additive wie z.B. Stabilisatoren, Entformungsmittel, Pigmente, Flammschutzmittel, Antistatika, Leitfähigkeitszusätze, Füllstoffe und Verstärkungsstoffe in den üblichen Mengen zugesetzt werden.

Im einzelnen können beispielsweise Graphit, Ruß, Metallfasern, Metallpulver, Kieselgur, Quarz, Kaolin, Glimmer, Tone, $CaF_2$, $CaCO_3$, Aluminiumoxide, Aluminiumnitrid, Silicate, Bariumsulfat, Glasfasern, C-Fasern, Keramik-Fasern und anorganische und organische Pigmente zugesetzt werden, sowie als Entformungsmittel beispielsweise Ester mehrwertiger Alkohole mit langkettigen Carbonsäuren wie Glycerinstearate, Pentaerythrittetrastearat und Trimethylolpropantristearat.

Beispiele für erfindungsgemäß als Legierungsbestandteil B) einsetzbare amorphe Thermoplaste sind aromatische Polycarbonate, aromatische Polycarbonate mit eingebauten Polysiloxanblöcken, eingebauten aliphatischen Polyetherblöcken oder eingebauten aliphatischen Polyesterblöcken, aromatische Polyester ohne einkondensierte Diphenole der Formel (I), aromatische Polyestercarbonate ohne einkondensierte Diphenole der Formel (I), aliphatisch-aromatische Polyester ohne einkondensierte Diphenole der Formel (I), amorphe, thermoplastische Polyamide, Polyarylensulfone, aromatische Polyether, aromatische Polyimide, Polyepoxide, Vinylpolymere und (Meth)Acrylpolymere.

Von diesen Beispielen werden bevorzugt die aromatischen Polycarbonate, aromatische Polycarbonate mit eingebauten Polysiloxanblöcken, aromatische Polyester ohne einkondensierte Diphenole der Formel (I), aromatische Polyestercarbonate ohne einkondensierte Diphenole der Formel (I), aliphatisch-aromatische Polyester ohne einkondensierte Diphenole der Formel (I), Polyamide und Vinylpolymere und besonders bevorzugt die aromatischen Polycarbonate, die aromatischen Polycarbonate mit eingebauten Polysiloxanblöcken, aliphatisch-aromatische Polyester ohne einkondensierte Diphenole der Formel (I), die Polyamide und die Vinylpolymeren eingesetzt.

Erfindungsgemäß als Legierungsbestandteil B) geeignete aromatische Polycarbonate sind solche auf Basis von Diphenolen, insbesondere der Formel (V)

$$HO\text{-}Z\text{-}OH \qquad (V),$$

in denen Z ein aromatischer Rest mit 6 bis 30 C-Atomen ist, der einen oder mehrere aromatische Kerne enthalten kann, die substituiert sein können. Solche Diphenole der Formel (V), nicht die Diphenole der Formel (I) umfassend, sind weiter vorn als Komponente (a) für den Aufbau der erfindungsgemäßen Polyester und Polyestercarbonate beschrieben. Besonders bevorzugtes Diphenol ist das 2,2-Bis-(4-hydroxyphenyl)-propan (Bisphenol A).

Es können sowohl Homopolycarbonate als auch Copolycarbonate sein, sie können sowohl linear als auch verzweigt sein.

Die Molekulargewichte $\overline{M}w$ (Gewichtsmittelmolekulargewicht, ermittelt nach der Gelpermeationschromatographie in Tetrahydrofuran) der anderen thermoplastischen Polycarbonate liegen zwischen 10 000 und 300 000, vorzugsweise zwischen 12 000 und 150 000.

Die Polycarbonate der Komponente B) sind im Prinzip bekannt oder nach bekannten Verfahren erhältlich.

Als Legierungsbestandteil B) können auch Polycarbonat-Polysiloxan-Blockcopolymere dienen, in denen der Polycarbonatanteil aus mindestens einem aromatischen Bisphenol der Formel (V) aufgebaut ist. Die Polysiloxanblöcke können beispielsweise in das Polycarbonat-Polysiloxan-Blockcopolymer eingebaut werden, indem man Polysiloxane mit Cl- oder Bisphenol-Endgruppen in die Polycarbonatreaktion, z.B. nach dem Zweiphasengrenzflächenverfahren, mit einführt. Solche Polysiloxane sind beispielsweise Polydimethylsiloxane der Formeln (VI) und (VII) mit

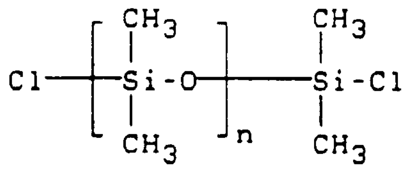 (VI)

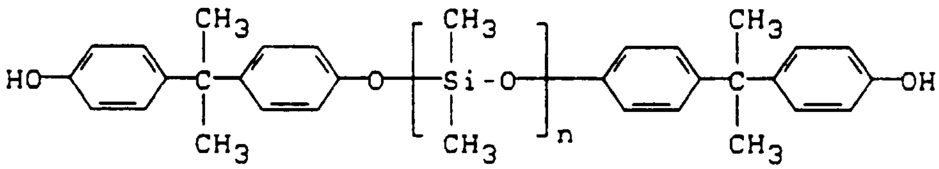

(VII)

mittleren Polykondensationsgraden von n = 5 bis 200. Solche und weitere einsetzbare Polysiloxanblöcke sind vielfach in der Literatur beschrieben. Der Siloxangehalt in den Polycarbonat-Polysiloxan-Blockcopolymeren kann in weiten Grenzen variiert werden, so z.B. von 0,1 bis 80 Gew.-%, je nach den gewünschten Eigenschaften des Blockcopolymers. Die Herstellung von geeigneten, in Polycarbonat einbaubaren Polysiloxanblöcken und die Synthese von Polycarbonat-Polysiloxan-Copolymeren wird beispielsweise beschrieben in: US-PS 3 189 662, DE-PS 1 595 790, DE-PS 2 411 123, DE-OS 2 411 363, EP-A-216 106 und DE-OS 3 506 472.

Als Legierungsbestandteil B) können beispielsweise auch Polycarbonat-Polyether-Blockcopolymere und Polycarbonat-Polyester-Blockcopolymere dienen mit aliphatischen Polyetherblöcken, z.B. Polyethylenoxid-, Polypropylenoxid- und bevorzugt Polybutylenoxid-Blöcken, oder mit aliphatischen Polyesterblöcken, z.B. aus Hexandiol-Adipinsäurepolyester oder Hexandiol-Dimerfettsäure-Polyester. Blockcopolymere dieser Art und ihre Herstellung sind beschrieben in den DE-OS 2 636 783, 2 636 784, 2 827 325, 2 726 376, 2 726 416, 2 726 417, 2 712 435 und 2 702 626.

Erfindungsgemäß als Legierungsbestandteil B) einsetzbare aromatische Polyester und Polyestercarbonate sind aus mindestens einem aromatischen Bisphenol der Formel (V), jedoch ohne einkondensierte Diphenole der Formel (I), aus mindestens einer aromatischen Dicarbonsäure und gegebenenfalls aus Kohlensäure aufgebaut. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4',5-dicarbonsäure.

Von den aromatischen Dicarbonsäuren werden besonders bevorzugt die Terephthalsäure und/oder Isophthalsäure eingesetzt. Besonders bevorzugtes Bisphenol ist das 2,2-Bis-(4-hydroxyphenyl)-propan (Bisphenol A).

Aromatische Polyester und Polyestercarbonate können nach Verfahren hergestellt werden, wie sie für die Polyester- bzw. Polyestercarbonat-Herstellung aus der Literatur bekannt sind, so z.B. nach Verfahren in homogener Lösung, nach Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Schmelzumesterungsverfahren (Acetatverfahren und Phenylesterverfahren) werden beispielsweise in den US-PS 3 494 885, 4 386 186, 4 661 580, 4 680 371 und 4 680 372, den EP-A-26 120, 26 121, 26 684, 28 030, 39 845, 91 602, 97 970, 79 075, 146 887, 156 103, 234 913, 234 919 und 240 301 und den DE-AS 1 495 626 und 2 232 877 beschrieben. Das Zweiphasengrenzflächenverfahren wird beispielsweise beschrieben in EP-A-68 014, 88 322, 134 898, 151 750, 182 189, 219 708 und 272 426 in DE-OS 2 940 024, 3 007 934 und 3 440 020 und in Polymer Reviews, Volume 10, Condensation Polymers by Interfacial and Solution Methods, Paul W. Morgan, Interscience Publishers New York, 1965, Kap. VIII, S. 325, Polyester.

Beim Acetatverfahren werden im allgemeinen Bisphenoldiacetat bzw. Bisphenol und Acetatanhydrid sowie aromatische Dicarbonsäure unter Abspaltung von Essigsäure zum Polyester kondensiert. Beim Phenylesterverfahren werden im allgemeinen Bisphenol, aromatische Dicarbonsäure bzw. Diphenylester der aromatischen Dicarbonsäure und gegebenenfalls Diphenylcarbonat unter Phenolabspaltung und gegebenenfalls $CO_2$-Abspaltung zum Polyester bzw. Polyestercarbonat umgesetzt. Beim Zweiphasengrenzflächenverfahren dienen als Ausgangsstoffe zur Herstellung von Polyestern bzw. Polyestercarbonaten im allgemeinen Alkalibisphenolat, aromatisches Dicarbonsäuredichlorid und gegebenenfalls Phosgen. Bei dieser Kondensationsreaktion werden der Polyester bzw. das Polycarbonat unter Alkalichloridbildung hergestellt. Im allgemeinen ist das gebildete Salz in der wäßrigen Phase gelöst, während der gebildete Polyester bzw. das gebildete Polyestercarbonat in der organischen Phase gelöst vorliegt und daraus isoliert wird.

Aliphatisch-aromatische Polyester, die als Legierungsbestandteil B) eingesetzt werden können, sind beispielsweise amorphe Polyester aus Cyclohexan-1,4-dimethanol und Terephthalsäure und/oder Isophthalsäure, die als Comonomere noch andere Dicarbonsäuren und aliphatische Dihydroxyverbindungen einkondensiert enthalten können, z.B. Glykol, Propylenglykol und Butylenglykol. Beispiele für solche Polyester sind Cyclohexan-1,4-dimethanol-Terephthalsäure-Polyeester, Cyclohexan-1,4-dimethanol-Terephthalsäure-Isophthalsäure-Copolyester und Cyclo-hexan-1,4-dimethanol-Terephthalsäure-Ethylenglykol-Copolyester. Solche Polyester werden beispielsweise beschrieben in EP-A-273 151, 273 152, 155 989, 226 974, 185 309, 152 825, 226 189 und 272 416 und in US-PS 4 188 314 und 4 634 737.

Amorphe thermoplastische Polyamide, die als Legierungsbestandteil B) verwendet werden können, sind beispielsweise zu erhalten durch Polykondensation von Diaminen wie Ethylendiamin, Tetramethylendiamin, Hexamethylendiamin, Decamethylendiamin, 2,2,4- und 2,4,4-Trimethylhexamethylendiamin, m- und p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diamino-dicyclohexylmethan, 3-Aminoethyl-3,5,5-trimethyl-cyclohexylamin, 2,5-Bis-(aminomethyl)-norbornan, 2,6-Bis-(aminomethyl)norbornan und 1,4-Diamino-methylcyclohexan, und von beliebigen Gemischen dieser Diamine mit Dicarbonsäuren, wie beispielsweise mit Oxalsäure, Adipinsäure, Azelainsäure, Decandicarbonsäure, Heptadecandicarbonsäure, 2,2,4-Trimethyladipinsäure, 2,4,4-Trimethyladipinsäure, Isophthalsäure und Terephthaisäure, und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden. Ferner sind amorphe Copolyamide einbezogen, die unter Mitverwendung von ω-Aminocarbonsäuren wie ω-Aminocapronsäure, ω-Aminoundecansäure oder ω-Aminolaurinsäure oder von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)norbornan erhältlich sind, solche, die aus Isophthalsäure, 4,4'-Diamino-di-cyclohexylmethan und ω-Caprolactam erhältlich sind, solche, die aus Isophthalsäure, 3,3'-Dimethyl-4,4'-diamino-dicyclohexylmethan und ω-Laurinlactam erhältlich sind, und solche, die aus Terephthalsäure und aus 2,2,4- und/oder 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diaminoisomeren

1 bis 30 Mol-% des 2,4'-Diaminoisomeren

0 bis 2 Mol-% des 2,2'-Diaminoisomeren

und gegebenenfalls entsprechend höherkondensierten Diaminen, die durch Hydrierung von Diaminodiphenylmethan technischer Qualität erhalten werden.

Die amorphen Polyamide und deren Herstellung sind bekannt (siehe beispielsweise Ullmann, Enzyklopädie der technischen Chemie, Band 19, S. 50).

Polyarylensulfone, die als Legierungsbestandteil B) eingesetzt werden können, haben im allgemeinen mittlere Molekulargewichte $\overline{M}w$ (Gewichtsmittel; gemessen nach der Lichtstreumethode in $CHCl_3$) von 10.000 bis 200.000, vorzugsweise von 20.000 bis 90.000. Beispiele dafür sind die nach bekannten Verfahren erhältlichen Polyarylensulfone aus 4,4'-Dichlordiphenylsulfon und mindestens einem Bisphenol, insbesondere 2,2-Bis-(4-hydroxyphenyl)-propan und Bis-(4-hydroxyphenyl)-sulfon, die beispielsweise zu Polyarylensulfonen mit difunktionellen Sulfonstruktureinheiten der Formeln (VIII) und (IX) führen.

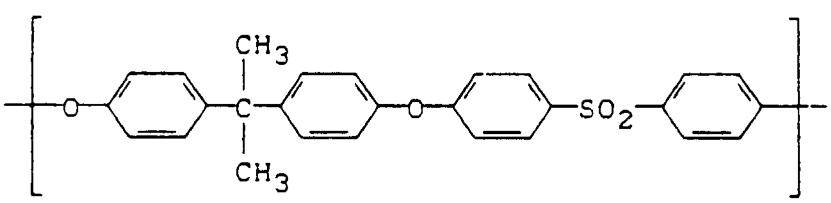

(VIII)

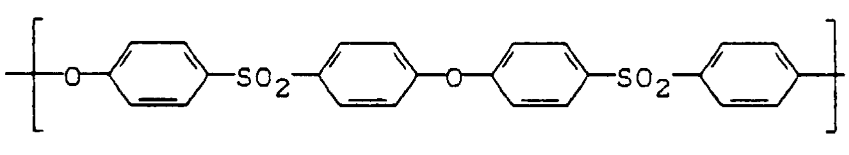

(IX)

Diese Polyarylensulfone sind bekannt (siehe beispielsweise US-PS 3 264 536, DE-AS 1 794 171, GB-PS 1 264

900, US-PS 3 641 207, EP-A-00 38 028, DE-OS 3 601 419 und DE-OS 3 601 420, EP 149 359, EP 294 773 und die Veröffentlichungen G. Blinne et al., Kunststoffe 75/1 (1985) 29-34 und R.N. Johnson et al., Journal of Polymer Science, Part A1, 5 (1967) 2375-2398. Die geeigneten Polyarylensulfone können auch in bekannter Weise verzweigt sein (siehe beispielsweise DE-OS 2 305 413).

Aromatische Polyether, die erfindungsgemäß als Legierungsbestandteil B) Einsatz finden können, sind beispielsweise Polyphenylenoxide. Polyphenylenoxide sind bekannt und werden beispielsweise beschrieben in US-PS 3 306 874, 3 306 875, 3 257 357, 3 257 358, 3 661 848, 3 219 625, 3 378 505, 3 639 656, 4 011 200, 3 929 930, EP-A-O 248 526, 0 271 699, DE-OS 2 126 434. Die Molekulargewichte $\overline{M}w$ Gewichtsmittel) sind im allgemeinen 10.000 bis 80.000, bevorzugt 15.000 bis 60.000. Polyphenylenoxide werden im allgemeinen durch eine oxidative Kupplungsreaktion von einem oder mehreren zweifach oder dreifach substituierten Phenolen als Homo-oder Copolymere erhalten. Als Katalysator der Reaktion dient im allgemeinen ein Kupfer-Amin-Komplex. Verwendet werden können Kupfer-Amin-Komplexe primärer, sekundärer und/oder tertiärer Amine Beispiele von geeigneten Homo-Polyphenylenoxiden sind:
Poly-(2,3-dimethyl-6-ethylphenylen-1,4-ether),
Poly-(2,3,6-trimethylphenylen-1,4-ether),
Poly-(2,4'-methylphenylphenylen-1,4-ether),
Poly-(2-bromo-6-phenylphenylen-1,4-ether),
Poly-(2-methyl-6-phenylphenylen-1,4-ether),
Poly-(2-phenylphenylen-1,4-ether),
Poly-(2-chlorophenylen-1,4-ether),
Poly-(2-methylphenylen-1,4-ether),
Poly-(2-chloro-6-ethylphenylen-1,4-ether),
Poly-(2-chloro-6-bromophenylen-1,4-ether),
Poly-(2,6-di-n-propylphenylen-1,4-ether),
Poly-(2-methyl-6-isopropylphenylen-1,4-ether),
Poly-(2-chloro-6-methylphenylen-1,4-ether)
Poly-(2-methyl-6-ethylphenylen-1,4-ether),
Poly-(2,6-dibromophenylen-1,4-ether),
Poly-(2,6-dichlorophenylen-1,4-ether),
Poly-(2,6-diethylphenylen-1,4-ether) und
Poly-(2,6-dimethylphenylen-1,4-ether).

Geeignete copolymere Polyphenylenoxide können z.B. von zwei oder mehr Phenolen hergestellt werden, die für die Herstellung der oben aufgeführten Homopolyphenylenoxide verwendet werden. Besonders bevorzugt ist der Poly-(2,6-dimethylphenylen-1,4-ether). Pfropf- und Blockcopolymere aus Polyphenylenoxiden und Polyvinylaromaten wie Polystyrol sind auch geeignet als Legierungsbestandteil B). Geeignete styrolgepfropfte Polyphenylenoxide werden beispielsweise in der Veröffentlichung "Xyron", Japan plastics age, März/April 1979, S 29 - 33 beschrieben.

Aromatische Polyimide, die als Legierungsbestandteil B) einsetzbar sind, sind beispielsweise aromatische Polyetherimide, wie sie in US-PS 4 395 518, 3 855 178, EP-A-120 183, 120 184, 179 471, 292 243, 278 066, DE-PS 2 735 501 und den Veröffentlichungen Polyetherimid, Kunststoffe-Plastics 4/1982, S. 32-35, Polyetherimide, Kunststoffe 73/5 (1983), S. 266-269, R.O. Johnson und H.S. Burlhis, J. of Pol. Sc., Polymer Symp. 70 (1983) S. 129-143 und D.M. White et al., J. of Pol. Sc., Pol. Chemistry Ed., 19 (1981), S. 1635-1685, beschrieben sind. Die Synthese dieser Polyetherimide kann, wie dort beschrieben, beispielsweise durch Umsetzen von Bisnitrobisphthalimiden und Alkalibisphenolaten unter Abspaltung von Alkalinitrit oder durch Umsetzen von Bisetherbisphthalsäureanhydriden mit Diaminen unter Wasserabspaltung erhalten werden. Ein bevorzugtes aromatisches Polyetherimid ist beispielsweise das aus wiederkehrenden Einheiten der Formel (X)

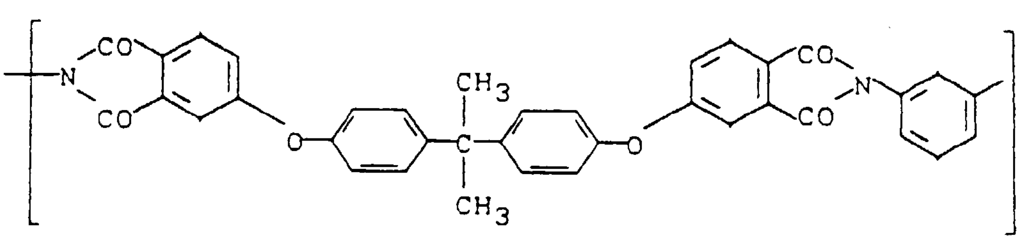

(X)

Polyepoxide, die als Legierungsbestandteil B) eingesetzt werden könnn, sind beispielsweise Polyepoxide, wie sie

aus Epichlorhydrin und Bisphenolen, z.B. Bisphenol A, nach bekannten Methoden hergestellt werden können. Formel (XI) zeigt ein besonders bevorzugtes Epoxid, in dem n beispielsweise 5 bis 200 sein kann.

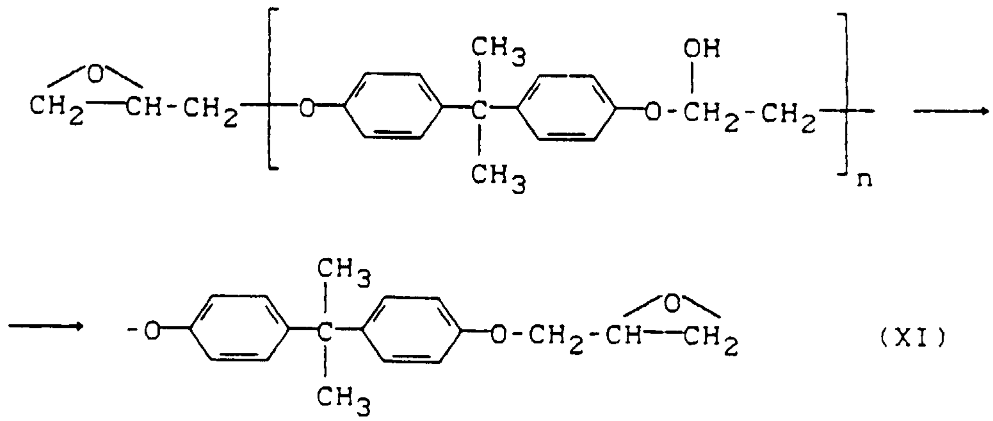

(XI)

Vinylpolymere und (Meth-)Acrylpolymere, wie sie als Legierungsbestandteil B) einsetzbar sind, Homo- und Copolymerisate, beispielsweise aus folgenden Monomeren:

1. Styrol und seine Derivate wie z.B. α-Methylstyrol, α-Chlorstyrol, p-Chlorstyrol, 2,4-Dichlorstyrol, p-Methylstyrol, 3,4-Dimethylstyrol, o- und p-Divinylbenzol, p-Methyl-α-methylstyrol und p-Chlor-α-methylstyrol, bevorzugt Styrol und α-Methylstyrol.

2. Acryl- und Methacrylverbindungen wie z.B. Acryl - und Methacrylsäure, Acrylnitril, Methacrylnitril, Methylacrylat, Äthylacrylat, n- und Isopropylacrylat, n- und Isobutylacrylat, tert.-Butylacrylat, 2-Äthylhexylacrylat, Methylmethacrylat, Äthylmethacrylat, n- und Isopropylmethacrylat, n- und Isobutylmethacrylat, tert.-Butylmethacrylat, Cyclohexylmethacrylat und Isobornylmethacrylat, bevorzugt Acrylnitril, Methacrylnitril, Methylmethacrylat, tert.-Butylmethacrylat.

3. Maleinsäureanhydrid und dessen Abkömmlinge, wie Maleinsäureester, Maleinsäurediester und Maleinimide, z. B. Alkyl- und Arylmaleinimide, wie beispielsweise Methyl- oder Phenylmaleinimid, bevorzugt Maleinsäureanhydrid und Maleinimide, insbesondere Phenylmaleinimid.

Die Monomeren der Gruppe 3 dienen im allgemeinen als Comonomere zu den Monomeren der Gruppen 1 und 2.

Beispiele für geeignete Homo- und Copolymerisate sind Polystyrol, Polymethylmethacrylat, Styrol-Methylstyrol-Copolymere, Styrol-Acrylnitril-Copolymere, α-Methylstyrol-Acrylnitril-Copolymere, Styrol-Maleinsäureanhydrid-Copolymere, Styrol-Phenylmaleinimid-Coplymere, Styrol-Methylmethacrylat-Copolymere, Methylmethacrylat/Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitril-tert.-Butylmethacrylat-Copolymere.

Die Vinylpolymeren und (Meth-)Acrylpolymeren können nach bekannten radikalischen, anionischen und kationischen Polymerisationsverfahren hergestellt werden. Auch die bekannte Redoxpolymerisation oder die bekannte Polymerisation mit metallorganischen Mischkatalysatoren kann vorteilhaft sein. Die Polymerisation kann in Masse, Lösung oder Emulsion stattfinden, wie bekannt.

Auch gemischte Verfahren wie Lösungs-, Fällungs- oder Massesuspensionsverfahren können Einsatz finden, wie bekannt. Die Gewichtsmittel-Molekulargewichte der Vinylpolymeren und (Meth-)Acrylpolymeren betragen im allgemeinen 10.000 bis 300.000, bevorzugt 30.000 bis 200.000.

Beispiele für erfindungsgemäß als Legierungsbestandteil C) einsetzbare teilkristalline Thermoplaste sind Polyolefine, Ionomere, aliphatisch-aromatische Polyester ohne einkondensierte Diphenole der Formel (I) Polyamide, aromatische Polyetherketone und Polyphenylensulfide. Besonders bevorzugt sind aliphatisch-aromatische Polyester ohne einkondensierte Diphenole der Formel (I) und die Polyamide.

Als Legierungsbestandteil C) sind erfindungsgemäß teilkristalline Polyolefine einsetzbar. Solche Polyolefine sind beispielsweise Homo- und Copolymerisate von Olefinen, wie z.B. Ethylen, Propylen, Buten-1, Penten-1, Hexen-1, Hepten-1, 3-Methylbuten-1, 4-Methylbuten-1, 4-Methylpenten-1, Octen-1 und andere. Einige solcher Polyolefine sind Polyethylen, Polypropylen, Polybuten-1, Poly-4-methylpenten-1. Beim Polyethylen unterscheidet man PE, HDPE (high

density), LDPE (low density), und LLDPE (very low density). Die unterschiedlichen Dichten des Polyethylens kommen durch unterschiedliche Verfahren und Cokondensation mit anderen Monomeren zustande, wie bekannt. Bekannte Verfahren zur Herstellung von Polyolefinen sind z.B. das Hochdruckverfahren und das Niederdruckverfahren (Ziegler-Natta-Katalyse mit metallorganischen Mischkatalysatoren).

Bevorzugte Polyolefine C) sind Polyethylen und Poly-4-methylpenten-1, besonders bevorzugt ist Polyethylen. Die Polyolefine können neben den Olefinen auch noch untergeordnete Mengen anderer Monomerer enthalten.

Als Legierungsbestandteil C) sind erfindungsgemäß auch Ionomere geeignet. Dabei handelt es sich im allgemeinen um Polyolefine, wie oben beschrieben, insbesondere um Polyethylen, die Monomere mit Säuregruppen cokondensiert enthalten, wie z.B. Acrylsäure, Methacrylsäure. Die Säuregruppen werden mit Hilfe von Metallionen wie beispielsweise $Na^+$, $Ca^{++}$, $Mg^{++}$ und $Al^{+++}$ in ionische, ggf. ionisch vernetzte Polyolefine umgewandelt, die sich jedoch noch thermoplastisch verarbeiten lassen. Solche Polymeren sind beispielsweise Ethylen-Acrylsäure-Copolymere, deren Säuregruppen in metallsalzartige Gruppen umgewandelt sind. Beschrieben werden solche Ionomeren z.B. in den Patentschriften US 3 264 272, 3 404 134, 3 355 319, 4 321 337.

Aromatisch-aliphatische Polyester, die als teilkristalliner Legierungsbestandteil C) einsetzbar sind, sind bevorzugt Polyalkylenterephthalate, also beispielsweise solche auf Basis von Ethylenglykol, Propandiol-1,3, Butandiol-1,4, Hexandiol-1,6 und 1,4-Bis-hydroxymethylcyclohexan. Besonders bevorzugt werden Polybutylenterephthalate, Polyethylenterephthalate und Copolymere aus Cyclohexan-1,4-dimethanol und Ethylenglykol sowie Terephthalsäure eingesetzt, soweit diese teilkristallin sind. Ganz besonders bevorzugt wird das Polybutylenterephthalat eingesetzt.

Die Molekulargewichte $\overline{M}w$ (Gewichtsmittel) dieser Polyalkylenterephthalate sind im allgemeinen 10.000 bis 200.000, bevorzugt 10.000 bis 80.000. Die Polyalkylenterephthalate können nach bekannten Verfahren beispielsweise aus Terephthalsäuredialkylester und dem entsprechenden Diol durch Umesterung erhalten werden (s. z.B. US-PS 2 647 885, 2 643 989, 2 534 028, 2 578 660, 2 742 494, 2 901 466).

Teilkristalline Polyamide, die sich als Legierungsbestandteil C) eignen, sind insbesondere Polyamid-6, Polyamid-6,6, Polyamid-4,6 und teilkristalline Copolyamide auf Basis der diesen Polyamiden zugrundeliegenden Monomeren. Weiterhin kommen teilkristalline Polyamide in Betracht, deren Säurekomponente insbesondere ganz oder teilweise (z.B. neben ε-Caprolactam) aus Adipinsäure und/oder Terephthalsäure und/oder Isophthalsäure und/oder Korksäure und/oder Sebacinsäure und/oder Azelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht und deren Zusammensetzungen im Prinzip aus dem Stand der Technik bekannt sind (siehe beispielsweise Encyclopedia of Polymers, Vol. 11, S. 315 ff).

Außerdem sind geeignet teilkristalline Polyamide, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 oder Copolyamide mit geringem Anteil, z.B. bis etwa 10 Gewichtsprozent, an anderen Co-Komponenten.

Als teilkristalliner Legierungsbestandteil C) lassen sich auch aromatische Polyetherketone einsetzen, die beispielsweise in den Patentschriften GB 1 078 234, US 4 010 147, EP 135 938, 292 211, 275 035, 270 998, 165 406, JA 62 151 421 und in den Veröffentlichungen C.K. Sham et. al, Polymer 29/6 (1988), S. 1016 - 1020, und J.E. Harris et al., J. Appl. Polym. Sc. 35/7 (1988), S. 1877 - 1891 beschrieben sind. Diese Polyetherketone können beispielsweise erhalten werden, indem man Bisphenole mit Bis-(halogenaryl)-ketonen in polaren aprotischen Lösungsmitteln in Gegenwart von Alkalicarbonaten umsetzt. So können beispielsweise durch Umsetzung von Hydrochinon mit 4,4'-Difluorbenzophenon Polymere mit difunktionellen Struktureinheiten der Formel (XII) und durch Umsetzung von Bis-(4-hydroxyphenyl)keton mit 4,4'-Difluorbenzophenon Polymere mit difunktionellen Struktureinheiten der Formel (XIII)

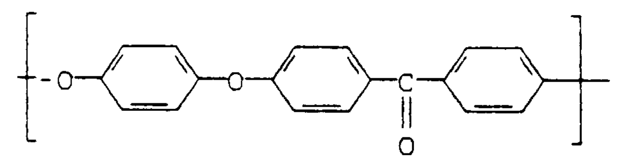

(XII)

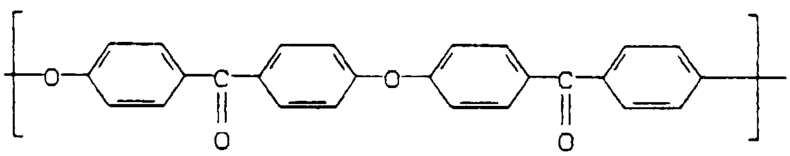

(XIII)

erhalten werden. Diese Polymere sind bevorzugt einsetzbare Polyetherketone.

Polymere, die als teilkristalliner Legierungsbestandteil C) einsetzbar sind, sind auch thermoplastische lineare oder verzweigte Polyarylensulfide. Sie haben Struktureinheiten der allgemeinen Formel (XIV)

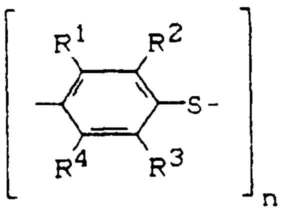

(XIV)

worin $R^1$ bis $R^4$ unabhängig voneinander $C_1$-$C_6$-Alkyl, Phenyl oder Wasserstoff bedeuten. Die Polyarylensulfide können auch Diphenyl-Einheiten enthalten. Am bedeutendsten ist das Polyarylensulfid mit $R^1$ bis $R^4$ gleich H.

Polyarylensulfide und ihre Herstellung sind bekannt und werden beispielsweise in den US-PS 3 354 129, 3 786 035, 3 853 824, 3 856 560, 3 862 095 und EP-A- 0 171 021 sowie in den Veröffentlichungen W. Baerecke, International Polymer Science and Technology, Vol 1, No. 9, 1974, S. T/52 - T/54 und A.S. Wood, Mod. Plast. Int. 18/4 (1988) S. 34 - 37 beschrieben.

Als Kautschuke (D) können thermoplastische Kautschuke eingesetzt werden. Solche thermoplastischen Kautschuke sind beispielsweise thermoplastische Polyurethane, Polyetherester, Polyesteramide, Polyetheramide, Polyetherimidester, thermoplastische Olefinelastomere, Ethylen-Ethylacrylat-Copolymere, Styrol-Butadien-Segment-Polymere, Styrol-Isopren-Segment-Polymere, hydrierte Styrol-Butadien-Segment-Polymere. Bevorzugu werden thermoplastische Polyurethane, Polyetherester und insbesondere hydrierte Styrol-Butadien-Segment-Polymere eingesetzt.

Thermoplastische Polyurethane werden beispielsweise aus drei Komponenten hergestellt, aus langkettigen bifunktionellen Polyolen, kurzkettigen Diolen oder Diamin und Diisocyanat. Die Umsetzung der drei Komponenten erfolgt z.B. bei Starttemperaturen zwischen 60 und 140°C unter starkem Rühren. Dabei reagieren die Isocyanat- mit den Hydroxylgruppen unter Bildung Urethangruppen ohne Abspaltung von Nebenprodukten. Nach Zerkleinern und mehrtägiger Lagerung kann das Elastomer thermoplastisch verarbeitet werden. Langkettige geeignete Polyole sind beispielsweise

Ethandiol-polyadipat, Butandiol-1,4-polyadipat, Ethandiol-butandiol-polyadipat, Hexandiol-1,6-neopentylglykol-polyadipat, Propylenglykol(1,2)-polyether, Tetramethylenoxid (= Tetrahydrofuran-polyether), Hexandiol-1,6-polycarbonat und Polycaprolacton.

Kurzkettige geeignete Diole oder Diamine (Kettenverlängerer) sind z.B. Äthandiol, Butandiol-1,4, Hexandiol-1,6, Hydrochinon-di-β-hydroxyethyl-ether und Isophorondiamin.

Geeignete Diisocyanate sind beispielsweise 4,4'-Diphenylmethan-diisocyanat (MDI), Hexamethylen-diisocyanat (HDI), Isophoron-diisocyanat (IPDI) und 1,5-Naphthylendiisocyanat (NDI).

Thermoplastische Polyurethane und ihre Herstellung werden zum Beispiel in der Veröffentlichung W. Goyert et al., Kunststoffe 68. Jahrgang 1978, S. 2 - 8, in der Monographie J.H. Saunders et al, Polyurethanes, Chemistry and Technology, Vol II, S. 299 - 451, Interscience Publishers, New York, 1964, und in den Patentschriften US 2 729 618, US 3 214 411 beschrieben.

Geeignete Polyetherester sind beispielsweise Blockcopolymere aus weichen Segmenten wie Polytetramethylenglykol- oder Polypropylenglykol- oder Polyethylenglykol-Terephthalat und harten Segmenten aus Polybutylenterephthalat wie beispielsweise in J.W. Crary, GAK 7/1986, Jahrgang 39, S. 330 - 334, und G.K. Hoeschele, Chimica 28/9 (1974) S. 544 - 552 beschrieben.

Geeignete Polyesteramide und Polyetheramide sind beispielsweise beschrieben in den EP-A-126 928, DE-OS 2 523 991, EP-A-281 461 und der Veröffentlichung Kunststoffe 72/5 (1982), S. 282 - 283. Polyetheramide sind beispielsweise Blockcopolymere aus Polyethersegmenten wie Polyethylenglykol, Polypropylenglykol und Polybutylenglykol und Polyamidsegmenten wie PA 6, PA 66, PA 11, PA 12, PA 611, P 612.

Polyetherimidester sind beispielsweise in US-PS 4 556 705 und in EP-A-0318 786. Im allgemeinen sind Polyetherimidester Reaktionsprodukte aus einem oder mehreren Diolen niedrigen Molekulargewichts, mindestens einer Dicarbonsäure und mindestens einer Polyoxyalkylen-Diimid-Dicarbonsäure.

Geeignete Styrol-Butadien-, Styrol-Isopren- und hydrierte Styrol-Butadien-Segment-Polymere sind beispielsweise in US-PS 3 333 024, 3 753 936, 3 281 383, DE-PS 2 819 493, DE-OS 2 613 200 und 2 643 757 beschrieben. Bevorzugt werden die SBS-Blockcopolymeren und die hydrierten SBS-Blockcopolymeren (SEBS = Styrol-Ethylen-Butylen-Styrol-Blockcopolymere).

Als Kautschuke (D) können auch andere Kautschuke als die oben genannten thermoplastischen Kautschuke eingesetzt werden. Solche Kautschuke sind beispielsweise Naturkautschuk, Epichlorhydrin-Kautschuke, Ethylen-Vinylacetat-Kautschuke, Polyethylenchlorsulfonkautschuke, Siliconkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke, Fluorkautschuke. Bevorzugt werden Siliconkautschuke, Dienkautschuke, hydrierte Dienkautschuke, Acrylatkautschuke, Ethylen-Propylen-Dien-Kautschuke (Dien z.B. Dicyclopentadien, Äthylidennorbornen oder Hexadien-1,4).

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol, Acryl- oder Methacrylverbindungen (z.B. Acrylnitril, Methacrylnitril, Acrylsäure, Methacrylsäure, Acrylsäurebutylester und Methylmethacrylat).

Besonders bevorzugt werden von den Dien-Kautschuken Butadien-, Butadien-Styrol-, Butadien-Methylmethacrylat, Butadien-Acrylsäurebutylester- und Butadien-Acrylnitril-Kautschuke. Acrylatkautschuke sind beispielsweise Alkylacrylat-Kautschuke auf der Basis von einem oder mehreren $C_1$-$C_8$-Alkylacrylaten, so insbesonders von Ethyl-, Butyl, Octyl-, 2-Ethylhexylacrylat. Diese Alkylacrylatkautschuke können bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleine Mengen (bis zu 5 Gew.-%) vernetzend wirkender polyfunktioneller Monomerer copolymerisiert enthalten. Beispiele sind Ester von ungesättigten Carbonsäuren mit einem Polyol (vorzugsweise 2 bis 20 Kohlenstoffatome in der Estergruppe) wie Ethylenglykoldimethacrylat. Ester einer mehrbasischen Carbonsäure mit einem ungesättigten Alkohol (vorzugsweise 8 bis 30 Kohlenstoffatome im Esterrest) wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest) wie Allylmethacrylat; Phosphorsäureester, z.B. Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat.

Geeignete Acrylatkautschuke sind auch Produkte, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern und einem Acrylatmantel enthalten.

Geeignete Siliconkautschuke können z.B. vernetzte Siliconkautschuke aus Einheiten der allgemeinen Formeln $R_2SiO$, $RSiO_{3/2}$, $R_3SiO_{1/2}$ und $SO_{2/4}$ sein, wobei R einen einwertigen Rest darstellt. Die Mengen der einzelnen Siloxaneinheiten sind dabei so bemessen, daß auf 100 Einheiten der Formel $R_2SiO$ 0 bis 10 Mol-Einheiten der Formel $RSiO_{3/2}$, 0 bis 1,5 Mol-Einheiten $R_3SiO_{1/2}$ und 0 bis 3 Mol.-Einheiten der Formel $SiO_{2/4}$ vorhanden sind.

R kann dabei entweder ein einwertiger gesättigter Kohlenwasserstoffrest mit 1 bis 18 Kohlenstoffatomen, der Phenylrest oder der Alkoxy-Rest oder eine radikalisch angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Silikonkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 Mol.-%, bezogen auf alle Reste R.

Sie können beispielsweise hergestellt werden, wie in EP-A-260 558 beschrieben.

Als Pfropfpolymerisate E) können in den erfindungsgemäßen Legierungen Pfropfpolymerisate eingesetzt werden, die durch radikalische Polymerisation von mindestens einem der vorstehend in drei Gruppen aufgeführten Monomeren in Gegenwart mindestens eines Kautschuks (nicht thermoplastischer Kautschuk) erhalten werden. Bevorzugte Herstellverfahren sind die Emulsions-, Lösungs-, Masse- oder Suspensionspolymerisation. So können die Pfropfpolymerisate beispielsweise durch radikalische Emulsionspfropfpolymerisation der Vinylmonomeren in Gegenwart von Kautschuklatices bei Temperaturen von 50 bis 90°C unter Verwendung wasserlöslicher Initiatoren wie Peroxodisulfat, oder mit Hilfe von Redoxinitiatoren erzeugt werden.

Einsatz können auch Kautschuke finden, die bereits aus vorgebildeten Kern-Mantel-Kautschukteilchen bestehen, die aus zwei verschiedenen Kautschuken bestehen. So kann beispielsweise der Kern aus einem Polybutadien-Kautschuk oder einem Siliconkautschuk bestehen und der Mantel aus einem Acrylatkautschuk (s. oben und z.B. EP 260 558 Kern/Mantel aus Silicon/Acrylat). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den zu pfropfenden Monomeren können polyfunktionelle vernetzende oder

reaktive Gruppen enthaltende Monomere mit aufgepfropft werden, um bestimmte Wirkungen in der Legierung zu erzielen (s. z.B. EP-A-230 282, DE-OS 3 601 419, EP-A-269 861).

Die Pfropfpolymerisate E) enthalten im allgemeinen 5 bis 90 Gew.-%, insbesondere 20 bis 85 Gew.-% Kautschuk und 95 bis 10 Gew.-%, insbesondere 80 bis 15 Gew.-%, pfropfcopolymerisierte Monomere. Die Kautschuke liegen in diesen Pfropfmischpolymerisaten im allgemeinen in Form wenigstens partiell vernetzter Teilchen einer mittleren Teilchengröße von 0,05 bis bis 5 µm, bevorzugt von 0,1 bis 2 µm, insbesondere von 0,1 bis 1 µm, vor.

Die bei den Vinylpolymeren und (Meth-)Acrylpolymeren sowie bei den Kautschuken als bevorzugt oder besonders bevorzugt genannten Monomeren und Kautschuke werden auch bei den Pfropfpolymerisaten bevorzugt bzw. besonders bevorzugt.

Die Polymerlegierungen dieser Erfindung können auf verschiedene Weise hergestellt werden. So können die Ausgangspolymeren gemeinsam in einem Lösungsmittel oder einem Lösungsmittelgemisch gelöst werden. Durch gemeinsames Ausfällen der Polymeren durch Zugabe eines Nichtlösers oder Eintropfen der Lösung in ein Fällungsmittel kann die Polymerlegierung erhalten werden, ebenso wie durch Abdampfen des Lösungsmittels.

Bevor die endgültige Mischung aller Legierungsbestandteile erfolgt, können auch einzelne Polymeren der endgültigen Legierung allein gemischt werden. So können beispielsweise Latices eines harzartigen Copolymerisats (z.B. Styrol-Acrylnitril-Copolymer) und eines Kautschuks (z.B. Butadien-Acrylnitril-Copolymer) durch gemeinsame Fällung gemischt werden, bevor sie mit dem Polycarbonat zur endgültigen Formmasse legiert werden.

Die Legierung der Ausgangspolymeren kann jedoch auch über die Schmelze in Mischvorrichtungen wie z.B. Extrudern, Innenknetern und Mischwalzen erfolgen.

Den einzelnen Legierungsbestandteilen können während ihrer Herstellung oder nach ihrer Herstellung übliche Additive zugesetzt werden, auch über ihre Lösung oder Schmelze. Übliche Additive können auch der Legierung während ihrer Herstellung zugesetzt werden. Auch der fertigen Legierung können übliche Additive zugesetzt werden, auch über ihre Lösung oder Schmelze.

Übliche Additive sind beispielsweise Stabilisatoren, Nucleierungsmittel, Entformungsmittel, Pigmente, Flammschutzmittel, Antistatika, Füllstoffe, Verstärkungsstoffe und Fasern in den üblichen Mengen.

Im einzelnen können beispielsweise Ruß, Kieselgur, Talkum, Kaolin, Glimmer, Tone, $CaF_2$, $CaCO_3$, Aluminiumoxide, Aluminiumnitrid, Silicate, Bariumsulfat sowohl als Füllstoffe und Verstärkungsstoffe als auch als Nucleierungsmittel, als Entformungsmittel beispielsweise Glycerinstearate, Pentaerythrittetrastearat und Trimethylolpropantristearat, als Fasern beispielsweise Glasfasern und C-Fasern und als Pigmente beispielsweise $TiO_2$, Fe-Oxide, Ruß und organische Pigmente eingesetzt werden.

Die erfindungsgemäßen Legierungen können in bekannter Weise, beispielsweise im Spritzguß oder in der Extrusion zu beliebigen Formkörpern, auch Platten, Folien und Fasern, verarbeitet werden.

Die erhaltenen Platten und Folien können Tiefziehverfahren unterworfen werden. Die Folien können im Verbund mit anderen Folien zu Verbundfolien verarbeitet werden. Weiterhin können die erfindungsgemäßen Legierungen auch in anderen Verbundwerkstoffen eingesetzt werden, z.B. in Kombination mit Fasern und anderen Polymeren.

Die aus den erfindungsgemäßen Legierungen hergestellten Formkörper haben aufgrund der vorn genannten Eigenschaften Vorteile gegenüber bisher bekannten Werkstoffen, insbesondere für Bauteile im Elektro- und Elektroniksektor, für große, hochbeanspruchte Gehäuseteile, für den Automobilsektor als Karosserieteile und Teile Motorraum und für gasdurchlässige und Gase trennende Folien.

<u>Beispiel 1:</u> Polyester

In 4400 g Wasser wurden unter Rühren 90 g NaOH (2,25 Mol), 1,13 g N-Ethylpiperidin (0,01 Mol) und 310 g 1,1-Bis-(4-hydroxyphenyl)-3,3,5-trimethyl-cyclohexan (1 Mol) gelöst. Dazu wurden unter weiterem Rühren 4000 g Methylenchlorid gegeben, in dem 5,36 g p-(1,1,3,3-Tetramethylbutyl)-phenol (0,026 Mol) und 205,6 g Isophthalsäuredichlorid (1,013 Mol) gelöst enthalten waren. Dann wurde noch eine Stunde weitergerührt. Die Temperatur wurde bei 20 bis 35°C gehalten. Anschließend wurde die organische Phase abgetrennt und die bisphenolatfreie wäßrige alkalische Phase verworfen. Die organische Phase wurde mit verdünnter wäßriger Phosphorsäure und anschließend mehrfach mit destilliertem Wasser gewaschen, bis sie elektrolytfrei war. Durch Abdampfen des Methylenchlorids aus der organischen Phase wurde ein farbloser Polyester erhalten, der noch 15 Stunden bei 130°C im Vakuum von Restspuren Methylenchlorid befreit wurde. Die Messung der relativen Viskosität des Polyesters ergab einen Wert von $\eta_{rel}$ = 1,313 (gemessen an der Methylenchloridlösung bei 25°C, c = 5 g/l Lösung). Die Differentialthermoanalyse ergab für die Glasübergangstemperatur des Polyesters einen Wert von $T_g$ = 256°C.

<u>Beispiel 2</u>: Polyestercarbonat

In 4300 g Wasser wurden unter Rühren 82 g NaOH (2,05 Mol) und 310 g 1,1-Bis-(4-hydroxyphenyl)-3,3,5-trimethylcyclohexan (1 Mol) gelöst. Dazu wurden unter weiterem Rühren 3900 g Methylenchlorid gegeben, in dem 5,36 g p-(1,1,3,3-Tetramethylbutyl)-phenol (0,026 Mol) und 182,7 g Isophthalsäuredichlorid (0,9 Mol) gelöst enthalten waren. Nach einer halben Stunde Rührzeit werden weitere 64 g NaOH (1,6 Mol) als 50%ige wäßrige Lösung zugesetzt. Dazu wurden unter weiterem Rühren 27 g Phosgen (0,3 Mol) gasförmig in das Reaktionsgemisch eingeleitet. Nach dem Phosgeneinleiten wurden 1,13 g N-Ethylpiperidin (0,01 Mol) gesetzt und noch eine Stunde lang nachgerührt. Die Temperatur wurde während der ganzen Zeit bei 20 bis 35°C gehalten. Die Aufarbeitung des Reaktionsgemisches erfolgte wie in Beispiel 1 beschrieben. Auch hier war die wäßrige alkalische Phase bisphenolatfrei. Das isolierte und getrocknete Polyestercarbonat zeigte folgende Werte: $\eta_{rel}$ = 1,300, $T_g$ = 252°C (beide Werte gemessen wie in Beispiel 1 beschrieben).

Beispiele 3 - 5 - Polyester

Auf die in Beispiel 1 beschriebene Weise wurden 3 weitere Polyester hergestellt, wobei nur die in der Tabelle aufgeführten Ausgangsstoffe, wie dort angegeben, variiert wurden. Die an den erhaltenen Polyestern gemessenen Werte der relativen Viskosität $\eta_{rel}$ und der Glasübergangstemperatur $T_g$ sind in der Tabelle enthalten.

Beispiele 6 - 8 - Polyestercarbonate

Auf die in Beispiel 2 beschriebene Weise wurden 3 weitere Polyestercarbonate hergestellt, wobei nur die in der Tabelle aufgeführten Ausgangsstoffe, wie dort angegeben, variiert wurden. Die an den erhaltenen Polyestern gemessenen Werte der relativen Viskosität $\eta_{rel}$ und der Glasübergangstemperatur $T_g$ sind in der Tabelle enthalten.

Tabelle

| Polyester (Beispiele 3 - 5) und Polyestercarbonate (Beispiele 6 - 8) | | | | | | | |
|---|---|---|---|---|---|---|---|
| | Ausgangsstoffe in Mol | | | | | | |
| Beispiel | BPTMC | BPA | TER | ISO | $COCl_2$ | $\eta_{rel}$ | Tg (°C) |
| 3 | 0,50 | 0,50 | 1,013 | - | - | 1,298 | 262 |
| 4 | 1,00 | - | 0,513 | 0,500 | - | 1,287 | 286 |
| 5 | 0,25 | 0,75 | 1,013 | - | - | 1,305 | 236 |
| 6 | 1,00 | - | 0,81 | 0,09 | 0,30 | 1,290 | 299 |
| 7 | 0,25 | 0,75 | 0,25 | - | 0,95 | 1,311 | 187 |
| 8 | 0,25 | 0,75 | 0,25 | 0,25 | 0,70 | 1,335 | 197 |

BPTMC = 1,1-Bis-(4-hydroxyphenyl)-3,3,5-trimethylcyclohexan,
BPA = Bisphenol A,
TER = Terephthalsäuredichlorid;
ISO = Isophthalsäuredichlorid;
$\eta_{rel}$ = relative Viskosität, gemessen wie in Beispiel I,
$T_g$ = Glasübergangstemperatur des erhaltenen Polyesters oder Polyestercarbonates aus Differentialthermoanalyse

Beispiel 9:

Neben Polyestern und Polyestercarbonaten für die erfindungsgemäßen Legierungen eingesetzte Polymere

1. PC-BPA

Polycarbonat aus Bisphenol-A mit Endgruppen aus 4-(1,1,3,3-Tetramethyl-butyl)-phenol, ηrel = 1,302 (gemessen in $CH_2Cl_2$-Lösung, c = 5 g/l, bei 25°C).

2. PCSI-BPA

Polysiloxan-Polycarbonat-Blockcopolymer aus Bisphenol-A und aus 7 Gew.-% Bisphenol-A-Endgruppen-haltigen Polydimethylsiloxanblöcken (bezogen auf Blockcopolymer) mit einer mittleren Polydimethylsiloxanblocklänge von $P_n$ = 70 Dimethylsiloxaneinheiten, ηrel = 1,298 (gemessen wie in Beispiel 1), Polycarbonatendgruppen wie in Beispiel 1.

3. APEC 35

Aromatisches Polyestercarbonat aus 65 Gew.-% Bisphenol-A-Carbonat-Einheiten und 35 Gew.-% Bisphenol-A-Terephthalat-Einheiten, Endgruppen wie in Beispiel 1, $\eta rel$ = 1,311 (gemessen wie in Beispiel 2).

4. PA-AM

Amorphes Polyamid aus Hexamethylendiamin und Isophthalsäure, $\eta_{rel}$ = 2,42 (gemessen in m-Kresol bei 25°C, c = 10 g/l Lösung), Tg = 123°C (gemessen durch Differentialthermoanalyse).

5. PST

Polystyrol mit einem Gewichtsmittelmolekulargewicht von $\overline{M}w$ = 170.000.

6. PBT

Polybutylenterephthalat, $\eta rel$ = 1,720 (in Phenol/o-Dichlorbenzol 1/1 Gew.-Teile bei 25°C, c = 5 g/l Lösung)

7. PPS

Polyphenylensulfid, Herstellverfahren nach EP 171 021, Schmelzviskosität $\eta_m$ = 50 Pa x sec (gemessen bei 306°C bei einer Scherrate $\tau$ = 100 Pa im Kegel-Platte-Viskosimeter)

8. PUR

Thermoplastisches Polyurethan mit einem Schmelzbereich von ca. 200 bis 220°C und einem Zahlenmittel-Mol.-Gewicht ($\overline{M}_n$) von 85.700, aufgebaut aus einem Oligoester aus Butylenglykol-1,4 und Adipinsäure ($\overline{M}_n$ 2000), 4,4-Diphenylmethan-diisocyanat und Butandiol-1,4 als Kettenverlängerer, Verhältnis von NCO- zu OH-Gruppen 1,03.

9. SEBS

Teilhydriertes Polystyrol-Polybutadien-Polystyrol-Blockcopolymer (= Polystyrol-Polyethylen-butylen-Polystyrol-Blockcopolymer), Kraton® G 1651, Handelsprodukt der Shell AG.

10. PB-MMA

Pfropfpolymerisat aus 80 Gew.-% Polybutadien und 20 Gew.-% gepfropften Methylmethacrylat, mittlere Kautschukteilchengröße 0,4 µm.

11. AC-MMA

Pfropfpolymerisat aus 80 Gew.-% vernetztem Butylacrylat-Kautschuk und 20 Gew.-% gepfropftem Methylmethacrylat, mittlere Kautschukteilchengröße 0,5 µm.

12. PB-SAN

Pfropfpolymerisat aus 50 Gew.-% Polybutadien und 50 Gew.-% gepfropften Styrol/Acrylnitril im Gew.-Verhältnis 72/28, mittlere Kautschukteilchengröße 0,4 µm.

13. AC-SAN

Pfropfpolymerisat aus 60 Gew.-% eines vernetzten Butylacrylatkautschuks und 40 Gew.-% gepfropftem Styrol/Acrylnitril, 72/28 Gew.-Teile, mittlere Kautschukteilchengröße 0,5 µm.

Beispiele 10 - 22

Eigenschaften von erfindungsgemäßen Legierungen sind in den Tabellen 1 - 3 aufgeführt. Die Legierungen wurden über die Schmelze in einem Doppelwellenextruder bei Temperaturen zwischen 265 und 330°C gemischt, jeweils bei

der niedrigsten Temperatur, bei der noch eine gute Homogenisierung der Legierungsbestandteile gegeben war.

Die für die Legierungen eingesetzten Polyester und Polyestercarbonate wurden auf dieselbe Weise hergestellt, wie in den Beispielen beschreiben, nur im entsprechend vergrößerten Maßstab. Die $\eta_{rel}$-Werte der eingesetzten Polyester und Polyestercarbonate lagen zwischen 1,295 und 1,315 (gemessen bei 25°C in $CH_2Cl_2$, c = 5 g/l Lösung).

Tabelle 1

Polymerlegierungen I

| Bei-spiel | Zusammensetzung Polymerlegierung (Gewichtsteile) | | | | | | | | Eigenschaften | | |
|---|---|---|---|---|---|---|---|---|---|---|---|
| | APE Bsp.3 | APEC Bsp.7 | APEC Bsp.8 | PC-BPA | PCSI-BPA | APEC35 | PA-AM | PST | Vicat B °C | $a_k$ kJ/m² | Bemer-kungen |
| 10 | 50 | | | 50 | | | | | 202 | 23 | F |
| 11 | | 50 | | | 50 | | | | 170 | 37 | FF |
| 12 | 30 | | | | | 70 | | | 196 | 24 | F |
| 13 | | 70 | | | | | 30 | | 171 | 14 | FF/B |
| 14 | | | 95 | | | | | 5 | 195 | 21 | F |

Vicat B(°C) = Vicat-Erweichungstemperatur VST/B/120 nach ISO 306 DIN 53 460 am Normkleinstab

$a_k$ = Kerbschlagzähigkeit bei 23°C nach ISO 179 DIN 53 453 am Normkleinstab

F = gute Fließfähigkeit der Schmelze

FF = besonders gute Fließfähigkeit der Schmelze

B = benzinfest (Stab 80 x 10 x 4 mm, 5 min bei 25°C in Toluol/Isooctangemisch 1/1 Gew.-Teile mit 0,6 % Randfaserdehnung gelagert), d.h. ohne Risse in den Prüfkörpern nach der Lagerung

APE = Polyester

APEC = Polyestercarbonat

Tabelle 2

Polymerlegierungen II

| Beispiel | Zusammensetzung Polymerlegierung (Gewichtsteile) | | | | | | | | | | | Eigenschaften | | |
|---|---|---|---|---|---|---|---|---|---|---|---|---|---|---|
| | APE Bsp.5 | APEC Bsp. 7 | APEC Bsp. 8 | PC-BPA | PCSI-BPA | PBT | PPS | PUR | SEBS | PB-MMA | AC-MMA | Vicat B °C | $a_k$ $kJ/m^2$ | Bemerkungen |
| 15 | 48 | | | | 48 | | | | 4 | | | 187 | 21 | B, F |
| 16 | | 35 | | 35 | | | | 20 | | 10 | | 152 | 37 | B, FF |
| 17 | | | 55 | | | 30 | | | | | 15 | 156 | 22 | B, FF |
| 18 | 55 | | | | | | 30 | | | | 15 | 227 | 11 | B, F |

Vicat B(°C) = Vicat-Erweichungstemperatur VST/B/120 nach ISO 306 DIN 53 460 am Normkleinstab

$a_k$ = Kerbschlagzähigkeit bei 23°C nach ISO 179 DIN 53 453 am Normkleinstab

F = gute Fließfähigkeit der Schmelze

FF = besonders gute Fließfähigkeit der Schmelze

B = benzinfest (Stab 80 x 10 x 4 mm, 5 min bei 25°C in Toluol/Isooctangemisch 1/1 Gew.-Teile mit 0,6 % Randfaserdehnung gelagert), d.h. ohne Risse in den Prüfkörpern nach der Lagerung

APE = Polyester

APEC = Polyestercarbonat

Tabelle 3

Polymerlegierungen III

| Beispiel | Zusammensetzung Polymerlegierung (Gewichtsteile) | | | | | | | Eigenschaften | | |
|---|---|---|---|---|---|---|---|---|---|---|
| | APEC Bsp.8 | APEC Bsp. 7 | APEC Bsp.5 | PB-MMA | PB-SAN | AC-MMA | AC-SAN | Vicat B °C | $a_k$ $kJ/m^2$ | Bemerkung |
| 19 | 75 | | | 25 | | | | 178 | 34 | B |
| 20 | | 80 | | | 20 | | | 173 | 42 | B, FF |
| 21 | | | 80 | | | 20 | | 208 | 24 | B, F |
| 22 | 85 | | | | | | 15 | 185 | 28 | B |

Vicat B(°C) = Vicat-Erweichungstemperatur VST/B/120 nach ISO 306 DIN 53 460 am Normkleinstab
$a_k$ = Kerbschlagzähigkeit bei 23°C nach ISO 179 DIN 53 453 am Normkleinstab
APE = Polyester
APEC = Polyestercarbonat

**Patentansprüche**

**Patentansprüche für folgende Vertragsstaaten : BE, FR, GB, IT**

1. Thermoplastische Legierungen aus

A) 1 bis 99 Gewichtsprozent mindestens eines Polyesters und/oder Polyestercarbonats aus

a) aromatischen Diphenolen
$b_1$) aliphatischen und/oder cycloaliphatischen und/oder aroratischen Dicarbonsäuren und gegebenenfalls
$b_2$) Kohlensäure,

enthaltend $b_1$) in einer Menge von 0,1 bis 100 Mol-% und $b_2$) in einer Menge von 0 bis 99,9 Mol-%, bezogen auf ($b_1$) + $b_2$), worin a) zu 0,1 bis 100 Mol-% aus Diphenolen der Formel

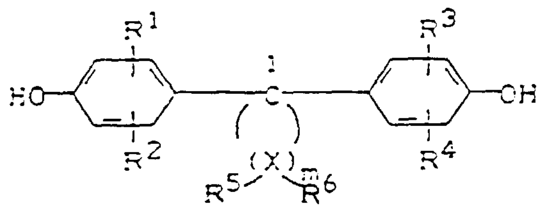

(I),

besteht, worin

| | |
|---|---|
| $R^1$, $R^2$, $R^3$ und $R^4$ | unabhängig voneinander Wasserstoff, $C_1$-$C_{12}$-Kohlenwasserstoffrest, Halogen |
| m | die ganze Zahl 4 oder 5 ist, |
| $R^5$ und $R^6$, | für jedes X individuell wähltar, unabhängig voneinander Wasserstoff oder $C_1$-$C_6$-Alkyl und |
| X | Kohlenstoff bedeuten, |

mit der Maßgabe, daß an mindestens einem Atom X $R^5$ und $R^6$ gleichzeitig Alkyl bedeuten,
und mindestens einem weiteren Bestandteil ausgewählt aus

B) 0 bis 99 Gew.-% mindestens eines amorphen von (A) verschiedenen Thermoplasten mit einer Glastemperatur von 40 bis 300°C,

C) 0 bis 99 Gew.-% mindestens eines teilkristallinen Thermoplasten mit einer Schmelztemperatur von 60 bis 400°C,

D) 0 bis 99 Gew.-% mindestens eines Kautschuks,

E) 0 bis 99 Gew.-% mindestens eines Pfropfpolymerisats aus mindestens einem Kautschuk mit mindestens einem aufgepfropften Polymer aus mindestens einem Monomeren aus der Gruppe der Vinylverbindungen, Acryl- und Methacrylverbindungen und Maleinsäureabkömmlinge.

2. Thermoplastische Legierungen gemäß Anspruch 1 bestehend aus der Komponente A), mindestens einem weitren Bestandteil ausgewählt aus B), C), D) und E) und zusätzlich mindestens einem Zusatz ausgewählt aus der Gruppe der Stabilisatoren, Nukleierungsmittel, Antistatika, Entformungsmittel, Pigmente, Flammschutzmittel, Füllstoffe, Verstärkungsstoffe und Fasern.

3. Polyester und Polyestercarbonate aus

a) aromatischen Diphenolen einerseits und
$b_1$) aliphatischen und/oder cycloaliphatischen und/oder aromatischen Dicarbonsäuren und gegebenenfalls
$b_2$) Kohlensäure,

enthaltend $b_1$) in einer Menge von 0,1 bis 100 Mol-% und gegebenenfalls $b_2$) in einer Menge von 0 bis 99,9 Mol-%, bezogen auf ($b_1$) + $b_2$), dadurch gekennzeichnet, daß a) zu 0,1 bis 100 Mol-% aus Diphenolen der Formel

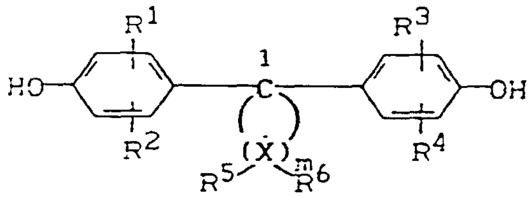

(I),

besteht, worin

| | |
|---|---|
| $R^1$, $R^2$, $R^3$ und $R^4$ | unabhängig voneinander Wasserstoff, $C_1$-$C_{12}$-Kohlenwasserstoffrest, Halogen, |
| m | die ganze Zahl 4 oder 5 ist, |
| $R^5$ und $R^6$, | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^5$ und $R^6$ gleichzeitig Alkyl bedeuten.

**4.** Polyester und Polyestercarbonate gemäß Anspruch 3, die übliche Additive enthalten.

**5.** Polyester und Polyestercarbonate gemäß Anspruch 3 und 4, die mindestens ein Additiv ausgewählt aus der Gruppe der Stabilisatoren, Entformungsmittel, Pigmenten, Flammschutzmittel, Antistatica, Leitfähigkeitszusätze, Füllstoffe und Verstärkungsstoffe enthalten.

**Patentansprüche für folgenden Vertragsstaat : DE**

**1.** Thermoplastische Legierungen aus

A) 1 bis 99 Gewichtsprozent mindestens eines Polyesters und/oder Polyestercarbonats aus

a) aromatischen Diphenolen
$b_1$) aliphatischen und/oder cycloaliphatischen und/oder aromatischen, Dicarbonsäuren und gegebenenfalls
$b_2$) Kohlensäure,

enthaltend $b_1$) in einer Menge von 0,1 bis 100 Mol-% und $b_2$) in einer Menge von 0 bis 99,9 Mol-%, bezogen auf ($b_1$) + $b_2$), worin a) zu 0,1 bis 100 Mol-% aus Diphenolen der Formel

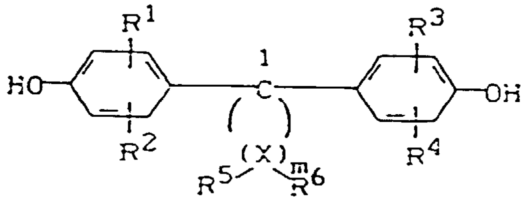

(I),

besteht, worin

| | |
|---|---|
| $R^1$, $R^2$, $R^3$ und $R^4$ | unabhängig voneinander Wasserstoff, $C_1$-$C_{12}$-Kohlenwasserstoffrest, Halogen |
| m | die ganze Zahl 4 oder 5 ist, |
| $R^5$ und $R^6$, | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^5$ und $R^6$ gleichzeitig Alkyl bedeuten, und mindestens einem weiteren Bestandteil ausgewählt aus

B) 0 bis 99 Gew.-% mindestens eines amorphen von (A) verschiedenen Thermoplasten mit einer Glastemperatur von 40 bis 300°C,

C) 0 bis 99 Gew.-% mindestens eines teilkristallinen Thermoplasten mit einer Schmelztemperatur von 60 bis 400°C,

D) 0 bis bis 99 Gew.-% mindestens eines Kautschuks,

E) 0 bis bis 99 Gew.-% mindestens eines Pfropfpolymerisats aus mindestens einem Kautschuk mit mindestens einem aufgepfropften Polymer aus mindestens einem Monomeren aus der Gruppe der Vinylverbindungen, Acryl- und Methacrylverbindungen und Maleinsäureabkömmlinge.

**2.** Thermoplastische Legierungen gemäß Anspruch 1 bestehend aus der Komponente A), mindestens einem weiteren Bestandteil ausgewählt aus B), C), D) und E) und zusätzlich mindestens einem Zusatz ausgewählt aus der Gruppe der Stabilisatoren, Nukleierungsmittel, Antistatika, Entformungsmittel, Pigmente, Flammschutzmittel, Füllstoffe, Verstärkungsstoffe und Fasern.

## Claims

### Claims for the following Contracting States : BE, FR, GB, IT

**1.** Thermoplastic alloys consisting of

A) 1 to 99 wt.% of at least one polyester and/or polyester carbonate consisting of

a) aromatic diphenols
$b_1$) aliphatic and/or cycloaliphatic and/or aromatic dicarboxylic acids and optionally
$b_2$) carbonic acid,

comprising $b_1$) in a quantity of from 0.1 to 100 mol-% and $b_2$) in a quantity of from C to 99.9 mol-%, based on ($b_1$ + $b_2$), wherein from 0.1 to 100 mol-% of a) consists of diphenols corresponding to the formula

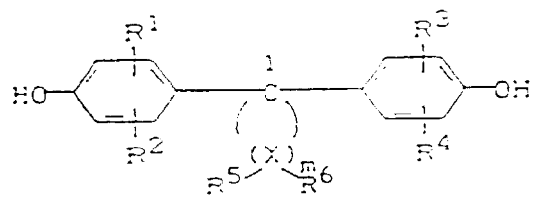

(I) ,

wherein

| | |
|---|---|
| $R^1$, $R^2$, $R^3$ and $R^4$ | independently of one another denote hydrogen, $C_1$-$C_{12}$ hydrocarbon group, halogen |
| m | is the integer 4 or 5, |
| $R^5$ and $R^6$, | individually selectable for each X, independently of one another denote hydrogen or $C_1$-$C_6$ alkyl and |
| X | denotes carbon, |

with the proviso that, on at least one atom X, $R^5$ and $R^6$ simultaneously denote alkyl, and of at least one additional component selected from

B) 0 to 99 wt.% of at least one amorphous thermoplastic different from A), having a glass temperature of from 40°C to 300°C,

C) 0 to 99 wt.% of at least one partly crystalline thermoplastic having a melting temperature of from 60°C to 400°C,

D) 0 to 99 wt.% of at least one rubber,

E) 0 to 99 wt.% of at least one graft polymer comprising at least one rubber with at least one grafted polymer comprising at least one monomer from among the vinyl compounds, acrylic and methacrylic compounds and maleic acid derivatives.

**2.** Thermoplastic alloys according to claim 1, consisting of component A), at least one further component selected from B), C), D) and E) and in addition at least one additive selected from among the stabilisers, nucleating agents, antistatic agents, mould release agents, pigments, flameproofing agents, fillers, reinforcing agents and fibres.

**3.** Polyesters and polyester carbonates consisting of

a) aromatic diphenols and
$b_1$) aliphatic and/or cycloaliphatic and/or aromatic dicarboxylic acids and optionally
$b_2$) carbonic acid,

comprising $b_1$) in a quantity of from 0.1 to 100 mol-% and optionally $b_2$) in a quantity of from 0 to 99.9 mol-%, based on ($b_1$ + $b_2$), characterised in that from 0.1 to 100 mol-% of a) consists of diphenols corresponding to the formula

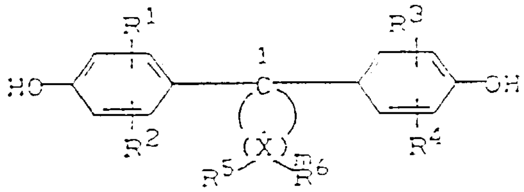 (I),

wherein

| | |
|---|---|
| $R^1$, $R^2$, $R^3$ and $R^4$ | independently of one another denote hydrogen, $C_1$-$C_{12}$ hydrocarbon group, halogen |
| m | is the integer 4 or 5, |
| $R^5$ and $R^6$, | individually selectable for each X, independently of one another denote hydrogen or $C_1$-$C_6$ alkyl and |

X denotes carbon,

with the proviso that, on at least one atom X, $R^5$ and $R^6$ simultaneously denote alkyl.

**4.** Polyesters and polycarbonates according to claim 3, comprising conventional additives.

**5.** Polyesters and polycarbonates according to claims 3 and 4, comprising at least one additive selected from among the stabilisers, mould release agents, pigments, flameproofing agents, antistatic agents, additives for promoting conductivity, fillers and reinforcing agents.

**Claims for the following Contracting State : DE**

**1.** Thermoplastic alloys consisting of

A) 1 to 99 wt.% of at least one polyester and/or polyester carbonate consisting of

a) aromatic diphenols
$b_1$) aliphatic and/or cycloaliphatic and/or aromatic dicarboxylic acids and optionally
$b_2$) carbonic acid,

comprising $b_1$) in a quantity of from 0.1 to 100 mol-% and $b_2$) in a quantity of from 0 to 99.9 mol-%, based on ($b_1$ + $b_2$), wherein from 0.1 to 100 mol-% of a) consists of diphenols corresponding to the formula

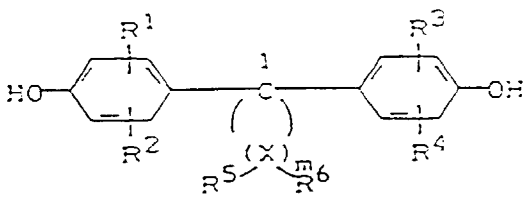

(I),

wherein

| | |
|---|---|
| $R^1$, $R^2$, $R^3$ and $R^4$ | independently of one another denote hydrogen, $C_1$-$C_{12}$ hydrocarbon group, halogen |
| m | is the integer 4 or 5, |
| $R^5$ and $R^6$, | individually selectable for each X, independently of one another denote hydrogen or $C_1$-$C_6$ alkyl and |
| X | denotes carbon, |

with the proviso that, on at least one atom X, $R^5$ and $R^6$ simultaneously denote alkyl, and of at least one additional component selected from

B) 0 to 99 wt.% of at least one amorphous thermoplastic different from A), having a glass temperature of from 40°C to 300°C,

C) 0 to 99 wt.% of at least one partly crystalline thermoplastic having a melting temperature of from 60°C to 400°C,

D) 0 to 99 wt.% of at least one rubber,

E) 0 to 99 wt.% of at least one graft polymer comprising at least one rubber with at least one grafted polymer comprising at least one monomer from among the vinyl compounds, acrylic and methacrylic compounds and

maleic acid derivatives.

**2.** Thermoplastic alloys according to claim 1, consisting of component A), at least one further component selected from B), C), D) and E) and in addition at least one additive selected from among the stabilisers, nucleating agents, antistatic agents, mould release agents, pigments, flameproofing agents, fillers, reinforcing agents and fibres.

## Revendications

### Revendications pour les Etats contractants suivants : BE, FR, GB, IT

**1.** Compositions thermoplastiques consistant en

A) 1 à 99 % en poids d'au moins un polyester et/ou polyestercarbonate de

a) des diphénols aromatiques,
$b_1$) des acides dicarboxyliques aliphatiques et/ou cycloaliphatiques et/ou aromatiques et le cas échéant
$b_2$) l'acide carbonique,

contenant $b_1$) en quantité de 0,1 à 100 mol % et $b_2$) en quantité de 0 à 99,9 mol % par rapport à la somme de ($b_1$ + $b_2$), a) consistant pour 0,1 à 100 mol % en diphénols de formule

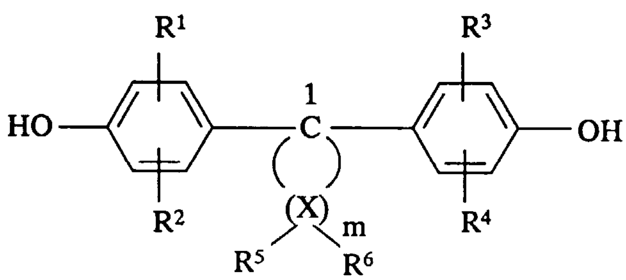

(I),

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,
m est égal à 4 ou 5,
$R^5$ et $R^6$, qui peuvent être choisis indépendamment pour chacun des atomes X, représentent chacun, indépendamment l'un de l'autre, l'hydrogène ou un groupe alkyle en $C_1$-$C_6$ et
X représente le carbone,

sous réserve que, sur au moins un atome X, $R^5$ et $R^6$ représentent tous deux des groupes alkyle, et au moins un autre constituant choisi parmi
B) 0 à 99 % en poids d'au moins une résine thermoplastique amorphe autre que (A), ayant une température de transition du second ordre de 40 à 300°C,
C) 0 bis à 99 % en poids d'au moins une résine thermoplastique partiellement cristalline ayant une température de fusion de 60 à 400°C,
D) 0 à 99 % en poids d'au moins un caoutchouc,
E) 0 bis à 99 % en poids d'au moins un polymère greffé d'au moins un caoutchouc avec au moins un polymère appliqué par greffage d'au moins un monomère pris dans le groupe des dérivés vinyliques, des dérivés acryliques et méthacryliques et des dérivés de l'acide maléique.

**2.** Compositions thermoplastiques selon la revendication 1, consistant en le composant A), au moins un autre composant choisi parmi B), C), D) et E) et en outre au moins un additif choisi parmi les stabilisants, les agents de nucléation, les agents antistatiques, les agents de démoulage, les pigments, les agents ignifugeants, les matières de charge, les matières renforçantes et les fibres.

**3.** Polyesters et polyestercarbonates de

a) des diphénols aromatiques d'une part et
$b_1$) des acides dicarboxyliques aliphatiques et/ou cycloaliphatiques et/ou aromatiques et le cas échéant
$b_2$) l'acide carbonique,

contenant b1) en quantité de 0,1 à 100 mol % et le cas échéant $b_2$) en quantité de 0 bis à 99 mol % par rapport à ($b_1$ + $b_2$), caractérisés en ce que a) consiste pour 0,1 à 100 mol % en diphénols de formule

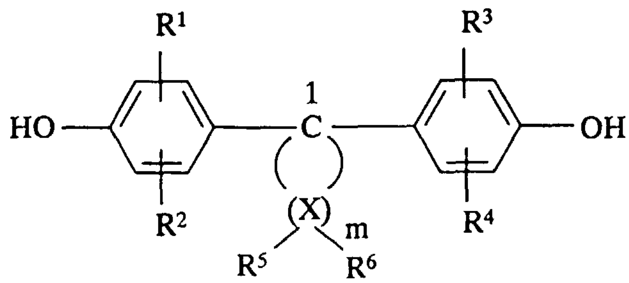

(I),

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,
m est égal à 4 ou 5,
$R^5$ et $R^6$, qui peuvent être choisis individuellement pour chacun des atomes X, représentent chacun, indépendamment l'un de l'autre, l'hydrogène ou un groupe alkyle en $C_1$-$C_6$ et
X représente le carbone,

sous réserve que, sur au moins un atome X, $R^5$ et $R^6$ représentent tous deux des groupes alkyle.

**4.** Polyesters et polyestercarbonates selon la revendication 3, contenant les additifs usuels.

**5.** Polyesters et polyestercarbonates selon les revendications 3 et 4, contenant au moins un additif choisi parmi les agents stabilisants, les agents de démoulage, les pigments, les agents ignifugeants, les agents antistatiques, les additifs de conductivité, les matières de charge et les matières renforçantes.

**Revendications pour l'Etat contractant suivant : DE**

**1.** Compositions thermoplastiques consistant en

A) 1 à 99 % en poids d'au moins un polyester et/ou polyestercarbonate de

a) des diphénols aromatiques,
$b_1$) des acides dicarboxyliques aliphatiques et/ou cycloaliphatiques et/ou aromatiques et le cas échéant
$b_2$) l'acide carbonique,

contenant $b_1$) en quantité de 0,1 à 100 mol % et $b_2$) en quantité de 0 bis à 99,9 mol % par rapport à la somme de ($b_1$ + $b_2$), a) consistant pour 0,1 à 100 mol % en diphénols de formule

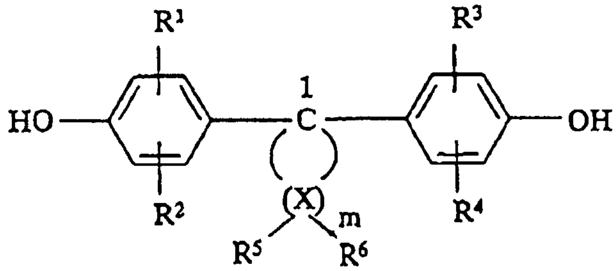

(I),

dans laquelle

$R^1$, $R^2$, $R^3$ et $R^4$ représentent chacun, indépendamment les uns des autres, l'hydrogène, un radical hydrocarboné en $C_1$-$C_{12}$, un halogène,
m est égal à 4 ou 5,
$R^5$ et $R^6$, qui peuvent être choisis individuellement pour chacun des atomes X, représentent chacun, indépendamment l'un de l'autre, l'hydrogène ou un groupe alkyle en $C_1$-$C_6$ et
X représente le carbone,

sous réserve que, sur au moins un atome X, $R^5$ et $R^6$ représentent tous deux des groupes alkyle, et au moins un autre constituant choisi parmi
B) 0 à 99 % en poids d'au moins une résine thermoplastique amorphe autre que (A), ayant une température de transition du second ordre de 40 à 300°C,
C) 0 à 99 % en poids d'au moins une résine thermoplastique partiellement cristalline ayant une température de fusion de 60 à 400°C,
D) 0 à 99 % en poids d'au moins un caoutchouc,
E) 0 à 99 % en poids d'au moins un polymère greffé d'au moins un caoutchouc avec au moins un polymère greffé d'au moins un monomère du groupe des dérivés vinyliques, des dérivés acryliques et méthacryliques et des dérivés de l'acide maléique.

**2.** Compositions thermoplastiques selon la revendication 1, consistant en le composant A) et au moins un autre composant choisi parmi B), C), D) et E) et en outre au moins un additif choisi parmi les stabilisants, les agents de nucléation, les agents antistatiques, les agents de démoulage, les pigments, les agents ignifugeants, les matières de charge, les matières renforçantes et les fibres.